# EUROPEAN PATENT SPECIFICATION

(11) **EP 4 109 967 B1**
(45) Date of publication and mention of the grant of the patent: **06.05.2026**
(21) Application number: 21771876.6
(22) Date of filing: 08.03.2021
(51) Int. Cl.: H04M 1/72448, H04W 8/18, H04W 52/02, H04M 1/72469, H04W 88/06

(54) **METHOD FOR SWITCHING BETWEEN SIM CARD AND ESIM CARD, AND ELECTRONIC DEVICE**
VERFAHREN ZUM UMSCHALTEN ZWISCHEN SIM-KARTE UND ESIM-KARTE UND ELEKTRONISCHE VORRICHTUNG
PROCÉDÉ DE COMMUTATION ENTRE UNE CARTE SIM ET UNE CARTE ESIM, ET DISPOSITIF ÉLECTRONIQUE

(30) Priority: 20.03.2020 CN 202010203729
(43) Date of publication of application: 28.12.2022
(73) Proprietor: Huawei Technologies Co., Ltd., Shenzhen, Guangdong 518129, (CN)
(72) Inventor: WANG, Shaojun, Shenzhen, Guangdong 518129 (CN); ZHANG, Xin, Shenzhen, Guangdong 518129 (CN); HUANG, Bin, Shenzhen, Guangdong 518129 (CN)
(74) Representative: Maiwald GmbH
(86) International application number: PCT/CN2021/079535
(87) International publication number: WO 2021/185105

(56) References cited:
- WO-A1-2019/148434
- CN-A- 101 184 293
- CN-A- 101 472 353
- CN-A- 103 298 161
- CN-A- 104 701 697
- CN-A- 109 195 189
- CN-A- 109 983 706
- CN-A- 110 621 013
- CN-A- 110 753 379

## Description

This application claims priority to Chinese Patent Application No. 202010203729.4, filed with the China National Intellectual Property Administration on March 20, 2020 and entitled "METHOD FOR SWITCHING BETWEEN SIM CARD AND ESIM CARD, AND ELECTRONIC DEVICE".

### TECHNICAL FIELD

This application relates to the field of terminal technologies, and in particular, to a method for switching between a SIM card and an eSIM card, and an electronic device.

### BACKGROUND

Currently, at least one SIM card may be generally inserted into a mobile phone, and an eSIM card is also supported by the mobile phone. However, a configuration of a baseband chip of the mobile phone cannot support all SIM cards and the eSIM card at the same time. Generally, in the mobile phone, one SIM card (for example, a secondary SIM card) shares a radio frequency resource with the eSIM card. When the secondary SIM card is in an operating state, the eSIM card is in an offline state. Conversely, when the eSIM card is in an operating state, a circuit of a secondary card slot is in a power-off state. If a SIM card is inserted into the secondary card slot or there is a physical SIM card in the secondary card slot when the mobile phone is powered on, the mobile phone cannot identify insertion of the SIM card and the inserted SIM card cannot be used. In this case, a user may consider that the SIM card is damaged or the mobile phone is faulty. How to switch to the SIM card when the eSIM card is in an operating state is a current technical problem.

CN 110 621 013 describes an SIM module management method and electronic equipment. For the existing electronic equipment supporting the double SIM modules, a scheme for supporting the eSIM module is provided, and the compatibility of the double SIM modules and the eSIM module is realized. The electronic equipment provided by the embodiment of the invention can support three SIM modules, wherein the three SIM modules at least comprise one eSIM module. And the other two SIM modules can be plug-in SIM modules, or one plug-in SIM module and one soft SIM module. A user can arbitrarily select two SIM modules from the three SIM modules to be in an online standby state at the same time, or can arbitrarily select one SIM module fromthe three SIM modules to be in an online standby state.

CN 110 753 379 A describes a double-card implementation method for single-communication-channel equipment. An eSIM card technology is introduced, an eSIM card and a switching device arranged between a processor and a communication module are installed on single communication channel equipment; the processor uses an eSIM card for communication by default; and when it is judged that the SIM card is accessed into the SIM card slot, the switching device is controlled to be switched to the channel connection communication module of the SIM card for communication, so that free switching of the SIM cardon the single communication channel equipment is realized, more communication options on the single communication channel equipment are provided for a user, and the use of the user is facilitated. The invention further discloses a double-card implementation system for the single-communication-channel equipment, and the double-card implementation system has the above beneficial effects.

### SUMMARY

The invention is defined by the independent claims 1, 8 and 12. Advantageous embodiments are described in the dependent claims. Independent claim 1 is directed to a method for switching between a SIM card and an eSIM card, independent claim 8 is directed to an electronic device and independent claim 12 is directed to a computer-readable storage medium.

### BRIEF DESCRIPTION OF DRAWINGS

FIG. 1 is a schematic diagram of a structure of a SIM card according to an embodiment of this application;
FIG. 2 is a schematic diagram of pin distribution of a SIM card according to an embodiment of this application;
FIG. 3 is a schematic diagram of pin distribution of a nano-SD card according to an embodiment of this application;
FIG. 4 is a schematic diagram of a structure of a 2-in-1 card connector according to an embodiment of this application;
FIG. 5A is a schematic diagram of a structure of a single-SIM single-active device according to an embodiment of this application;
FIG. 5B is a schematic diagram of a structure of a dual-SIM single-active device according to an embodiment of this application;
FIG. 5C is a schematic diagram of a structure of a dual-SIM dual-active device according to an embodiment of this application;
FIG. 6 is a schematic diagram of an insertion and removal detection principle of a card tray according to an embodiment of this application;
FIG. 7A is a schematic flowchart of a method for detecting a to-be-detected card according to an embodiment of this application;
FIG. 7B is a schematic flowchart of another method for detecting a to-be-detected card according to an embodiment of this application;
FIG. 8 is a schematic flowchart of a method for switching between a SIM card and an eSIM card according to an embodiment of this application;
FIG. 9A to FIG. 9C are schematic diagrams of some user interfaces according to an embodiment of this application;
FIG. 10 is a schematic flowchart of another method for switching between a SIM card and an eSIM card according to an embodiment of this application;
FIG. 11A to FIG. 11C are schematic diagrams of some user interfaces according to an embodiment of this application;
FIG. 12 is a schematic diagram of a structure of an electronic device according to an embodiment of this application;
FIG. 13 is a block diagram of a software structure of an electronic device according to an embodiment of this application; and
FIG. 14A, FIG. 14B, and FIG. 14C are a schematic flowchart of a method for switching between a SIM card and an eSIM card according to an embodiment of this application.

### DESCRIPTION OF EMBODIMENTS

The terms used in the following embodiments of this application are only intended to describe particular embodiments, and are not intended to limit this application. The terms "one", "a", "the", "the foregoing", "this", and "the one" of singular forms used in this specification and the appended claims of this application are also intended to include plural forms, unless otherwise specified in the context clearly. It should be further understood that, a term "and/or" used in this application indicates and includes any one or all of possible combinations of one or more listed items.

First, some concepts in embodiments of this application are described with reference to the accompanying drawings, including a subscriber identity module (Subscriber Identity Module, SIM), an embedded SIM (eSIM), a secure digital (Secure Digital, SD) card, a card slot, and the like.
(1) Subscriber identity module (Subscriber Identity Module, SIM): The subscriber identity module, also referred to as a SIM card, is configured to implement a connection to a mobile network, for example, implement access to a global system for mobile communications (global system for mobile communications, GSM) network or a universal mobile telecommunications system (universal mobile telecommunications system, UMTS) network. The subscriber identity module used in the LTE 3GPP standard is also referred to as a universal subscriber identity module (universal subscriber identity module, USIM). The USIM is also a type of SIM. The SIM card is a universal integrated circuit card (UICC).

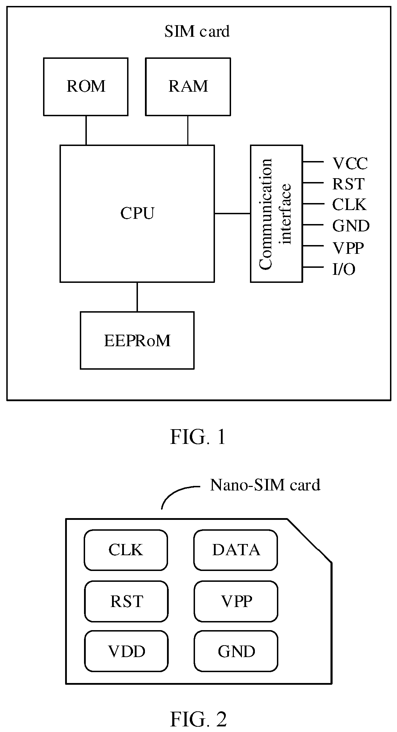

As shown in FIG. 1, the SIM card includes a central processing unit (CPU), a read-only memory ROM (read-only memory, ROM), a random access memory (random access memory, RAM), an electrically erasable programmable read-only memory (electrically erasable programmable read-only memory, EEPROM), and a communication interface. The ROM, the RAM, the EEPROM, and the communication interface are coupled to the CPU. In the SIM card, the RAM is also referred to as a work memory, the ROM is also referred to as a program memory, and the EEPROM is also referred to as a data memory. The communication interface may include at least six pins (also referred to as pins), as shown in FIG. 1. The communication interface may also include more pins. FIG. 2 is a schematic diagram of pin distribution of a SIM card according to an embodiment of this application. The SIM card includes six pins: power supply (VCC), reset (RST), clock (CLK), ground (GND), programming voltage (VPP), and data (I/O or DATA).

The SIM card may be configured to store user-related data, including system original data stored by a SIM card manufacturer, for example, an international mobile subscriber identity (IMSI); network parameters and user data injected by a mobile operator when issuing a card to a user, for example, authentication information and algorithm, and encryption information and algorithm; and data stored by the user in a use process, for example, an SMS message, an address book, and location information in a latest location registration.

### (2) eSIM card

The eSIM card is usually embedded inside a mainboard of an electronic device. The eSIM card is an embedded SIM card, and may replace a physical SIM card. However, the eSIM card is much smaller in size. Different from a SIM card, the eSIM card allows a number or an operator to be changed at will, because information on the eSIM card may be rewritten. The eSIM card also includes some or all of the pins shown in the foregoing SIM card. The eSIM card is remotely configured through OTA (over-the-air) card writing, to download, install, activate, deactivate, and delete an operator's configuration file, and download the operator's configuration file to the terminal over a network. In another implementation, the eSIM card may alternatively be a pure-software functional unit.

### (3) SD card

The SD card is a secure digital card and is a memory card. The SD card in embodiments of this application is a TF card. The TF card is a T-Flash card and is also referred to as a micro SD card. The TF card is widely used in a portable device such as a mobile phone, so that it is also referred to as a mobile phone memory card.

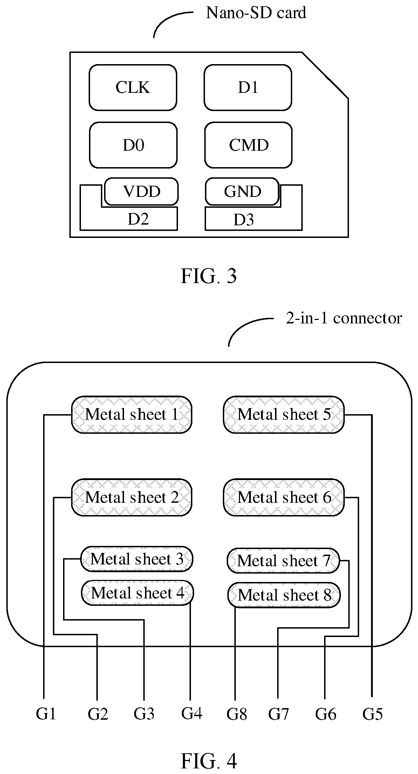

In some embodiments of this application, the SD card may be a nano-SD card. FIG. 3 is a schematic diagram of pin distribution of the nano-SD card according to an embodiment of this application. The SD card may include eight pins: clock (CLK), data bit 0 (D0), power supply voltage (VCC), data bit 2 (D2), data bit 1 (D1), command/reply (CMD), ground (GND), and data bit 3 (D3).

Alternatively, the SD card may be an SD card of another type. This is not limited in this application.

### (4) Card slot

In embodiments of this application, the card slot may be a card slot into which a plurality of cards may be inserted. The card slot may include a card holder and a card tray. The card tray may include a location for fastening at least one card. The card holder includes at least one card connector. The card connector may be a SIM card connector or an SD card connector. For example, the card tray is a dual-card tray, and includes a primary card tray and a secondary card tray. The primary card tray is configured to fasten a primary card, and the secondary card tray is configured to fasten a secondary card. The card holder includes a primary card connector and a secondary card connector. The primary card connector may be a SIM card connector and is configured to connect to a primary SIM card (also referred to as a primary card). The secondary card connector may be a 2-in-1 connector and is configured to connect to a secondary SIM card and an SD card.

FIG. 4 is a schematic diagram of a structure of a 2-in-1 card connector according to an embodiment of this application. The 2-in-1 card connector includes eight metal sheets that are in a one-to-one correspondence with the eight pins on the nano-SD card shown in FIG. 3. The eight metal sheets are respectively a metal sheet 1, a metal sheet 2, ..., and a metal sheet 8. The eight metal sheets of the 2-in-1 card connector are configured to connect to the eight pins on the SD card in a one-to-one correspondence, and connect to the six pins on the SIM card. The 2-in-1 card connector further includes eight pins respectively connected to the eight metal sheets, which are respectively G1, G2, ..., and G8. The eight pins are coupled to another apparatus or chip, for example, a baseband processor, a central processing unit, or a battery management module.

When the 2-in-1 card connector is connected to the nano-SD card shown in FIG. 3, the pins of the SD card are connected to the metal sheets of the 2-in-1 card connector, and the metal sheets 301, 302, ..., and 308 are respectively connected to CLK, D0, VDD, D2, D1, CMD, GND, and D3 of the SD card.

When the 2-in-1 card connector is connected to the SIM card shown in FIG. 2, the pins of the SIM card are connected to the metal sheets of the 2-in-1 card connector, and metal sheets 1 to 8 of the SIM card are respectively connected to CLK, RST, VDD, VDD, DATA, VPP, GND, and GND of the SIM card. Both a metal sheet 3 and a metal sheet 4 are connected to VDD, and both a metal sheet 7 and a metal sheet 8 are connected to GND.

The following describes an electronic device in embodiments of this application.

The electronic device in embodiments of this application may be referred to as a terminal, a terminal device, user equipment (user equipment, UE), and the like. The electronic device may be a mobile phone, a tablet computer, a notebook computer, an ultra-mobile personal computer (ultra-mobile personal computer, UMPC), a netbook computer, a personal digital assistant (personal digital assistant, PDA), an on board unit (On board Unit, OBU), a wearable device (for example, a watch, a band, or a smart helmet), a smart home device (a rice cooker, an acoustic device, a home manager device, or the like), an augmented reality (augmented reality, AR)/virtual reality (virtual reality, VR) device, or the like.

In embodiments of this application, the electronic device may be a single-SIM single-active device, a dual-SIM single-active device, a dual-SIM dual-active device, a multi-SIM multi-active device, or the like. The electronic device may include an application processor, a power management module, a baseband processor, and at least one radio frequency resource. The "card" is a physical SIM card. It should be understood that the electronic device described in embodiments of this application supports at least one eSIM card, and the at least one eSIM card shares a same radio frequency resource with one physical SIM card. The following separately describes the single-SIM single-active device, the dual-SIM single-active device, the dual-SIM dual-active device, the multi-SIM multi-active device, and the like.

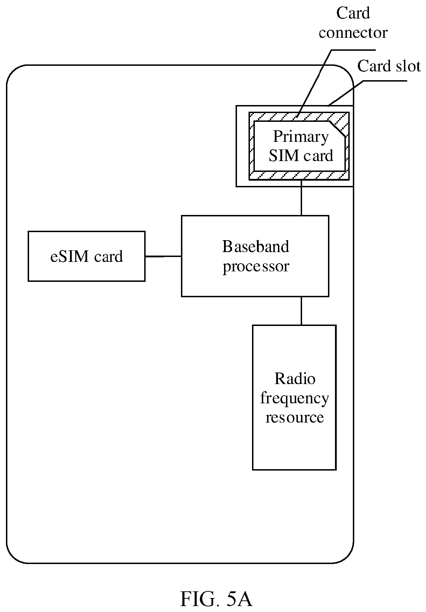

The single-SIM single-active device shown in FIG. 5A includes only a card slot into which only one SIM card may be inserted. The card slot includes only one card connector. When a SIM card is inserted into the card slot, the SIM card is connected to the baseband processor by using the primary card connector. The eSIM card is connected to the baseband processor. The device includes one radio frequency resource, the SIM card shares the one radio frequency resource with the eSIM card, and only one of the eSIM card and the primary SIM card inserted into the card slot can be selected for use. In other words, when the SIM card is in an operating state, the eSIM card is in an off state; conversely, when the eSIM card is in an operating state, the SIM card is in an off state. Switching may be performed between the eSIM card and the eSIM card.

Optionally, the card connector is a 2-in-1 connector. The card connector may be further configured to connect to an SD card. When the SD card is inserted into the card slot, the SD card may exchange data with the application processor in the device.

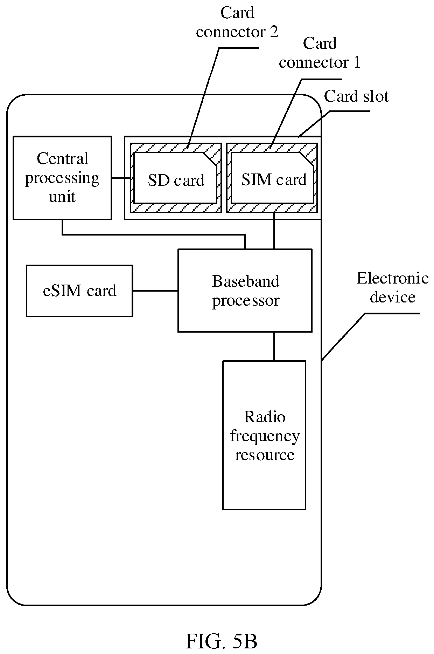

The dual-SIM single-active device shown in FIG. 5B includes a card slot into which two SIM cards may be inserted. The card slot includes two card connectors: a card connector 1 and a card connector 2. A SIM card may be inserted into the card connector 1 or the card connector 2, but only a SIM card connected to the card connector 1 may be used. The card connector 1 is connected to the baseband processor, and the eSIM card is connected to the baseband processor. The device includes one radio frequency resource, the SIM card connected to the card connector 1 shares the same radio frequency resource with the eSIM card, and only one of the eSIM card and the SIM card connected to the card connector 1 can be selected for use. The SD card may be connected to the application processor by using the card connector 2, but the card connector 2 is not coupled to the baseband processor. Therefore, when the SD card is inserted into the location of the card connector 2, the SD card may be normally used; but when a SIM card is inserted into the location of the card connector 2, the SIM card cannot be identified.

Optionally, the connector 1 may be a SIM card connector, and the card connector 2 may be an SD card connector. In some other implementations of this application, both the card connector 1 and the card connector 2 may be 2-in-1 connectors.

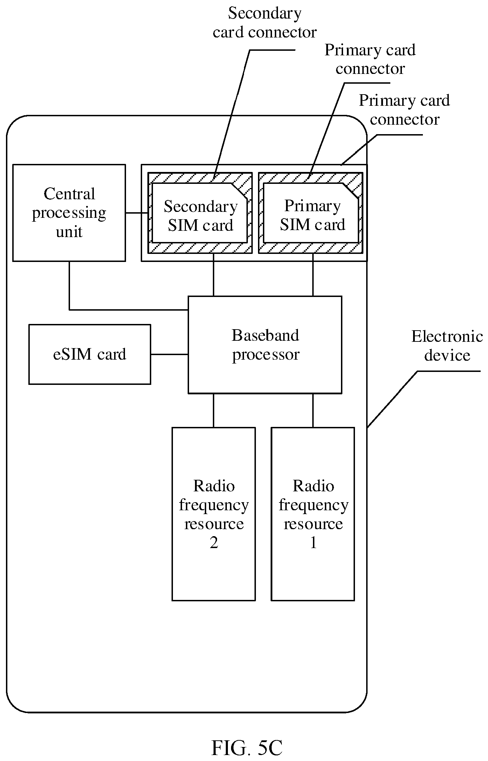

The dual-SIM dual-active device shown in FIG. 5C includes a card slot into which two SIM cards may be inserted. The card slot includes two card connectors: a primary card connector and a secondary card connector. A SIM card connected to the primary card connector is referred to as a primary SIM card, and a SIM card connected to the secondary card connector is referred to as a secondary SIM card. Both the primary card connector and the secondary card connector are connected to the baseband processor. The eSIM card is connected to the baseband processor. The device includes two radio frequency resources. The primary SIM card independently occupies a radio frequency resource 1. The eSIM module shares a radio frequency resource 2 with the secondary SIM card. Only one of the eSIM card and the secondary SIM card can be selected for use.

Optionally, the secondary card connector may be a 2-in-1 card connector. When an SD card is inserted into a corresponding location of the secondary card connector, the primary SIM card, the eSIM card, and the SD card can all be used normally. When the secondary SIM card is inserted into a corresponding location of the secondary card connector, the primary SIM card can be used normally, but only one of the eSIM card and the secondary SIM card can be selected for use.

In some embodiments of this application, the eSIM card may alternatively share one radio frequency resource with the primary SIM card, and the secondary SIM card independently occupies one video resource.

The multi-SIM multi-active device, for example, an M-SIM N-active device, includes a card slot into which M SIM cards may be inserted, where M and N are positive integers greater than 2. The card slot may include M card connectors, which are respectively a card connector 1, a card connector 2, ..., and a card connector M. The device may support T eSIM cards, which are respectively an eSIM card 1, an eSIM card 2, ..., and an eSIM card T. The T eSIM cards or the at least one eSIM card shares a radio frequency resource with a plurality of SIM cards inserted into the card slot. For example, a SIM card inserted into a corresponding location of the card connector 1 shares one radio frequency resource with the eSIM card 1, a SIM card inserted into a corresponding location of the card connector 2 shares one radio frequency resource with the eSIM card 2, ..., and a SIM card inserted into a corresponding location of the card connector T shares one radio frequency resource with the eSIM card T. Herein, an example in which M is not less than T is used for description. In some other implementations of this application, T may alternatively be greater than M. In this case, some eSIM cards in the T eSIM cards are independently coupled to a baseband chip, and independently occupies the radio frequency resource.

Similarly, some or all of the M card connectors may be 2-in-1 card connectors. When an SD card is inserted into the 2-in-1 card connector, the SD card can be normally used.

It should be noted that in embodiments of this application, that a SIM card or an eSIM card is in an "operating state" is also referred to as that the SIM card or the eSIM card is "enabled", indicating that the SIM card or the eSIM card is connected to a baseband processor/baseband chip and occupies one radio frequency resource of an electronic device. That the SIM card or the eSIM card is in an "off state" is also referred to as that the SIM card or the eSIM card is "disabled", indicating that the SIM card or the eSIM card is not connected to the baseband processor/baseband chip, and the electronic device cannot perform communication by using the SIM card or the eSIM card.

The radio frequency resource may include a modem processor, at least one filter, a switch, a power amplifier, a low noise amplifier (low noise amplifier, LNA), and the like. In some embodiments, some functional modules of the radio frequency resource may be shared by a plurality of radio frequency resources. It should be noted that in this embodiment of this application, the modem (modem) may include the radio frequency resource, the baseband processor, the eSIM card, and the like, and is configured to connect the SIM card or the eSIM card to a mobile network. The modem may be an independent chip, which is referred to as a baseband chip. In some other embodiments of this application, the eSIM card may not include the eSIM card.

It should be understood that the application processor is a central processing unit in the electronic device, or a unit of an application running in the central processing unit.

An example in which the electronic device is the dual-SIM dual-active device shown in FIG. 5C is used below to describe an insertion and removal detection method and principle of a card tray, a detection method and principle of a SIM card, a detection method and principle of an SD card, and the like.

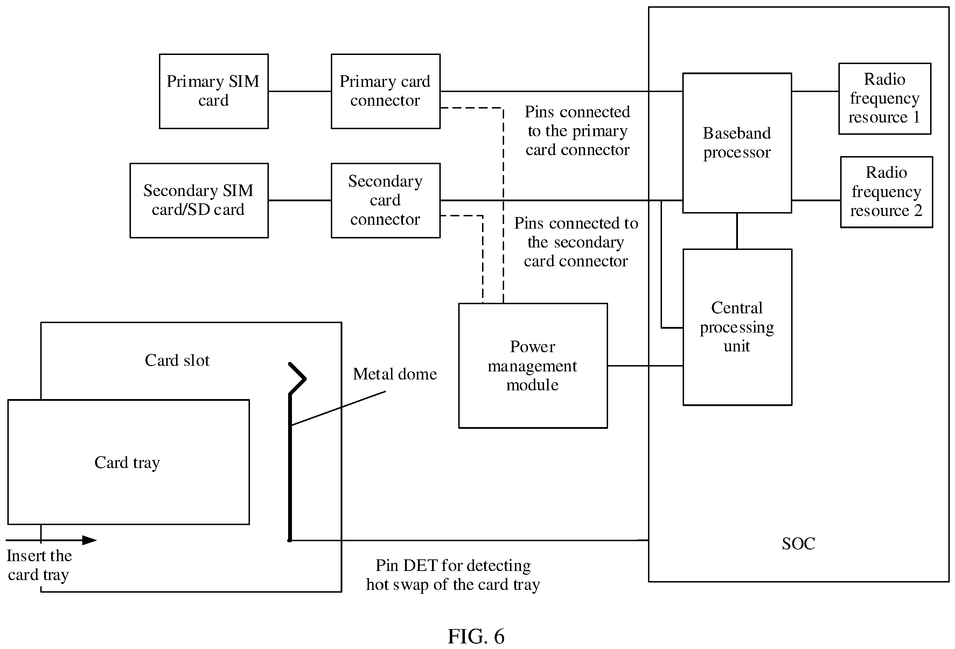

FIG. 6 is a schematic diagram of the insertion and removal detection principle of the card tray according to an embodiment of this application. A card slot includes the card tray and a card holder. The card holder includes a card connector. When a UICC card (a SIM card or an SD card) is not inserted into the card slot, pins (the metal sheets 1 to 8 shown in FIG. 4) of the card connector are unconnected. The card holder further includes a metal dome. The metal dome is connected to a system on chip (System on a Chip, SOC), and is configured to detect a pin DET for hot swap of the card tray. The metal dome is connected to a high-level signal by using a resistor Rp. When the card tray is not inserted into the card holder, the metal dome is pulled up to a high level. In this case, the detected pin DET is at a high level. After the card tray is inserted into the card holder, the metal dome deforms and is in contact with a wall of the card holder. Because the wall of the card holder is grounded, the metal dome is at a low level. In this case, the detected pin DET is at a low level.

In some embodiments, when the card tray is not inserted into the card holder, the metal dome is connected to the wall of the card holder. In this case, the pin DET connected to the metal dome is at a low level. When the card tray is inserted into the card holder, the metal dome is not connected, and the pin DET connected to the metal dome is at a high level.

Therefore, the electronic device may identify, by detecting a signal or a signal change of the pin DET, whether the card tray is inserted into the card slot. For example, in a process in which the electronic device is powered on, if it is detected that the signal of the pin DET is a low-level signal, this indicates that the card tray is in the card slot, and a type (for example, whether the card is an SD card or a SIM card) of the UICC card in the card slot may be further detected. For another example, if it is detected, in a running process of the electronic device, that the signal of the pin DET changes from a low level to a high level, this indicates that the card tray is removed, and the UICC card is also removed from the card tray. Conversely, if it is detected that the signal of the pin DET changes from a high level to a low level, this indicates that the card tray is inserted into the card holder, and the UICC card in the card tray is also inserted into the card slot.

It should be understood that the metal dome is connected to the system on chip (System on a Chip, SOC), and is configured to detect a pin for hot swap of the card tray, so that the SOC can identify a level or a level change of a GPIO pin by using the DET, to identify a status of the card tray, and insertion or removal of the card tray. It should be further understood that in some other implementations of this application, the baseband processor, the radio frequency resource 1, and the radio frequency resource 2 may not be integrated into the SOC, but may be used as independent chips. Alternatively, the power management module may be integrated into the SOC.

After detecting that the card tray is inserted into the card holder or in a process in which the electronic terminal is powered on, the electronic device may further detect the type of the UICC card in the card tray. In other words, the electronic device may determine whether the UICC card (also referred to as a to-be-detected card in this embodiment of this application) is a SIM card or an SD card. In a specific implementation, the electronic device may control levels of some pins in the secondary card connector by using the power management module, to detect levels of other pins in the secondary card connector, and identify based on the levels whether the to-be-detected card is a SIM card. It should be understood that the primary SIM card independently occupies one radio frequency resource, and a method for detecting the primary SIM card may be a detection method in the conventional technology, which is not discussed herein. In this embodiment of this application, detection of the SIM card is for the SIM card that shares the radio frequency resource with the eSIM card. The to-be-detected card or the SIM card described below is a card that is connected to the SIM card connector and that shares the radio frequency resource with the eSIM card, for example, the secondary SIM card or an SD card connected to the secondary card connector in FIG. 6.

Because the eSIM card is in an operating state, the electronic device cannot run a driver of the secondary SIM card; otherwise, the eSIM card cannot operate normally. When the electronic device is powered on, because occupation of a radio frequency resource conflicts between the eSIM card and the SIM card, the electronic device may detect, without running a SIM card driver, whether the to-be-detected card is a SIM card. The following describes a principle of detecting a SIM card according to this embodiment of this application. In the nano-SD card shown in FIG. 4, the card connector connected to the to-be-detected card includes eight metal sheets and eight pins, and the eight pins and the eight metal sheets of the card connector are connected in a one-to-one correspondence. When the card connector is connected to a SIM card, both a first metal sheet and a second metal sheet in the eight metal sheets are connected to a first pin of the SIM card. Optionally, both a third metal sheet and a fourth metal sheet in the eight metal sheets are connected to a second pin of the SIM card. In this case, the first pin of the SIM card may be a power supply pin VDD of the SIM card, and the second pin of the SIM card is a ground pin GND of the SIM card. It should be understood that the first pin or the second pin may alternatively be another pin of the SIM card.

Therefore, the electronic device inputs, by using the power management module, a first electrical signal to a pin that is in the card connector and that is connected to the first metal sheet, and detects an electrical signal of a pin that is in the card connector and that is connected to the second metal sheet, to obtain a second electrical signal. The electronic device may input, by using the power management module, a third electrical signal to a pin that is in the card connector and that is connected to the third metal sheet, and detect an electrical signal of a pin that is in the card connector and that is connected to the fourth metal sheet, to obtain a fourth electrical signal. Further, when the first electrical signal is consistent with the second electrical signal and the third electrical signal is consistent with the fourth electrical signal, the electronic device determines that the to-be-detected card is a SIM card.

When the first electrical signal is consistent with the second electrical signal, the electronic device determines that the to-be-detected card is a SIM card.

For another example, when the first electrical signal is consistent with the second electrical signal and the third electrical signal is consistent with the fourth electrical signal, the electronic device determines that the to-be-detected card is a SIM card.

In a specific implementation, when an SD card is inserted into a corresponding location of the card connector, eight pins G1, G2, ..., and G8 of the card connector are respectively connected to eight pins CLK, D0, VDD, D2, D1, CMD, GND, and D3 of the SD card. However, when a SIM card is inserted into a corresponding location of the card connector, the eight pins G1, G2, .... and G8 of the card connector are respectively connected to pins CLK, RST, VDD, VDD, DATA, VPP, GND, and GND of the SIM card. Both G3 and G4 are connected to VDD, and both G7 and G8 are connected to GND. When the card connector is connected to a SIM card, both G3 and G4 are connected to VDD, and both G7 and G8 are connected to GND. Therefore, levels of G3 and G4 are the same, and levels of G7 and G8 are the same. However, when the card connector is connected to an SD card, the levels of G3 and G4 may be different, and the levels of G7 and G8 may also be the same. This feature of the SIM card may be used to detect whether the to-be-detected card is a SIM card.

The following provides two methods for detecting the to-be-detected card in this embodiment of this application.

### Method 1:

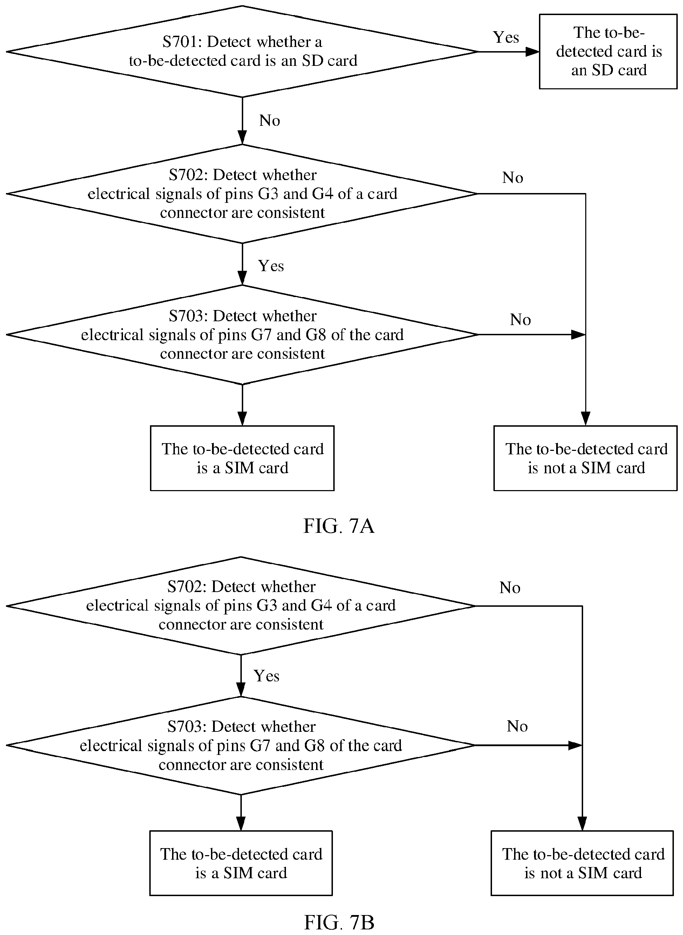

Because an SD card and an eSIM card do not conflict with each other and can run at the same time, it may be first detected whether the to-be-detected card is an SD card. If the to-be-detected card is an SD card, the electronic terminal may normally access data in the SD card, and the SIM card does not need to be detected. FIG. 7A is a schematic flowchart of a method for detecting the to-be-detected card according to an embodiment of this application. The method includes but is not limited to the following steps.

S701: The electronic device detects whether the to-be-detected card is an SD card. If the to-be-detected card is not an SD card, the electronic device detects whether the to-be-detected card is a SIM card, and S702 is specifically performed. If the to-be-detected card is an SD card, S703 is performed.

S702: The electronic device detects whether electrical signals of the pins G3 and G4 of the card connector are consistent. The card connector is connected to the to-be-detected card. If the electrical signals are consistent, S703 is performed; otherwise, the to-be-detected card is not a SIM card.

S703: The electronic device detects whether electrical signals of the pins G7 and G8 of the card connector are consistent. If the electrical signals are consistent, the to-be-detected card is a SIM card; otherwise, the to-be-detected card is not a SIM card.

In another implementation, the electronic device may first perform S703 and then perform S702. To be specific, the electronic device first detects whether the electrical signals of the pins G7 and G8 of the card connector are consistent. If the electrical signals are consistent, S702 is performed; otherwise, the to-be-detected card is not a SIM card. In this way, when the electrical signals of the pins G3 and G4 of the card connector are consistent, the electronic device determines that the to-be-detected card is a SIM card; otherwise, the to-be-detected card is not a SIM card.

In a specific implementation, the electronic device may raise the level of G3 by using the battery management module, and detect the level of G4. When G4 is at a high level, the electronic device may determine that the to-be-detected card is a SIM card. To further improve detection accuracy, the electronic device may raise the level of G7 by using the battery management module, to detect the level of G8. When G8 is at a high level, the electronic device may determine that the to-be-detected card is a SIM card. Conversely, if the level of G4 is a low level or the level of G8 is a low level, it indicates that the SIM card is not a SIM card.

In another embodiment of this application, after the level of G3 is raised, levels of G6 and G5 may be further detected. Table 1 below is an example of levels of pins and corresponding detection results.

**Table 1**

| Pin | G6 | G5 | G4 | G8 | Detection result |
|---|---|---|---|---|---|
| Level status | Low | Low | High | High | SIM card |
| Level status | Low | Low | Low | Low | No card |

### Method 2:

The electronic device does not support an SD card. In other words, the card tray cannot house an SD card. Alternatively, both the card tray and the card connector support the SD card, but the card connector is not connected to the processor, and the electronic device does not support reading of the SD card. In this case, S701 may not be performed, and whether the to-be-detected card is a SIM card may be directly detected. FIG. 7B is a schematic flowchart of a method for detecting the to-be-detected card according to an embodiment of this application.

A specific method for detecting whether the to-be-detected card is an SD card may be as follows: Because the SD card and the eSIM card do not conflict with each other and may run at the same time, after the electronic device is powered on or after the electronic device detects a card tray insertion event, the electronic device may power on the to-be-detected card, run an SD card driver, and send an access request to the SD card. After the access succeeds, it indicates that the to-be-detected card is an SD card; otherwise, the to-be-detected card is not an SD card. In this case, the to-be-detected card may be further detected, to identify whether the card is a SIM card.

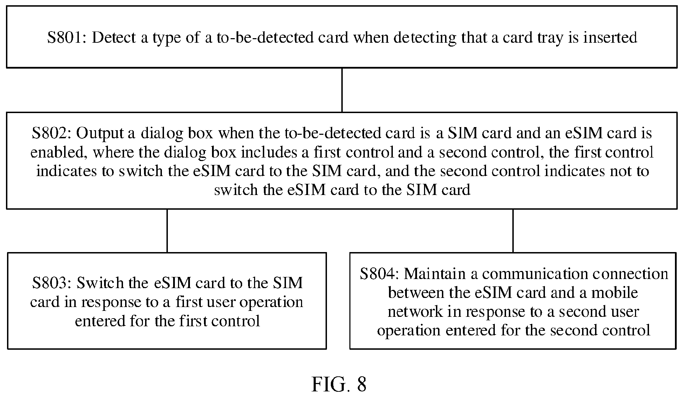

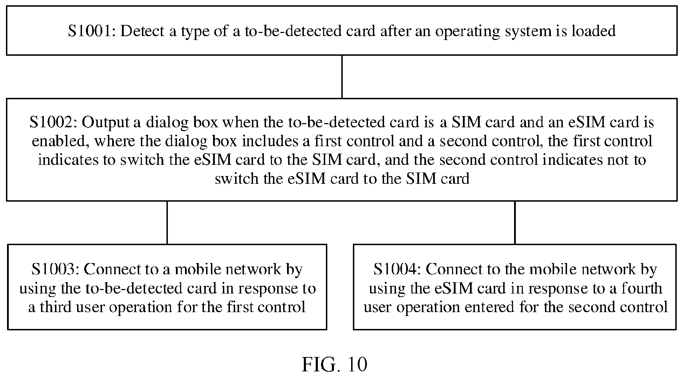

With reference to the electronic device shown in FIG. 5A to FIG. 5C, the following describes embodiments of a method for switching between a SIM card and an eSIM card provided in this application. The following Embodiment 1 describes the method for switching between a SIM card and an eSIM card. The method is triggered when a user inserts a SIM card after the electronic device is powered on and an eSIM card is in an operating state. Refer to a schematic flowchart of the method for switching between a SIM card and an eSIM card shown in FIG. 8. The following Embodiment 2 describes the method for switching between a SIM card and an eSIM card in a process in which the electronic device is powered on. Refer to a schematic flowchart of the method for switching between a SIM card and an eSIM card shown in FIG. 10. The method for switching between a SIM card and an eSIM card may be implemented by the foregoing electronic device (the electronic device shown in FIG. 5A to FIG. 5C).

### Embodiment 1

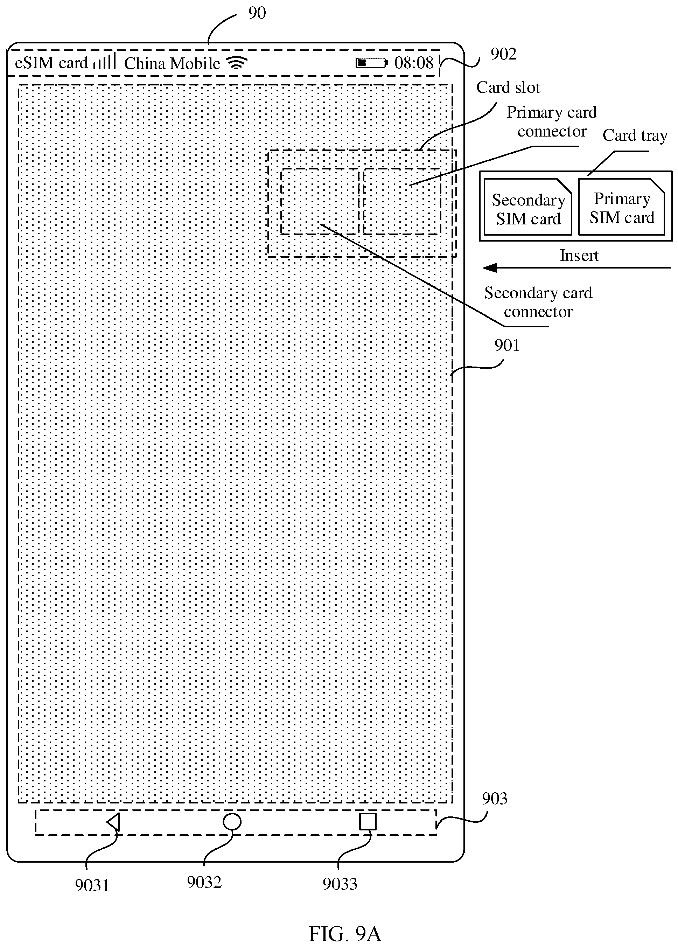

After an electronic device is powered on, a user may remove a card tray. In this case, after identifying that the card tray is removed, an electronic terminal may release a connection of a SIM card and/or an SD card on the card tray. The user may place the SIM card or the SD card into the card tray, to insert the card tray carrying a card (a secondary SIM card or the SD card) into a card slot of the electronic device. As shown in FIG. 9A, an operation of removing or inserting the SIM card may be performed when the electronic device is on any interface. After a card is removed or before a card is inserted, a user interface of the electronic device is shown in FIG. 9A. An interface 90 includes a content display area 901, a status bar 902, and a navigation bar 903.

The content display area 901 may be a home screen that is of the electronic device and that is currently displayed by the electronic device, may be a user interface of a currently opened application, or the like.

The status bar 902 may include a network status (including a name of an operator, signal strength of a mobile network, and the like) of a SIM card or an eSIM card currently used by the electronic device, time, a Wi-Fi icon, a current battery level, and the like. It should be understood that after the card tray is removed, a current eSIM card of the electronic device can still be normally connected, and it is identified that no physical SIM card is currently connected to a network. The network status of the eSIM card may be displayed on a current user interface 90. In FIG. 9A, an example in which the eSIM card is of China Mobile is used for description.

The navigation bar 903 may include system navigation buttons such as a return button 9031, a home screen (home screen) button 9032, and an outgoing call task history button 903. When detecting that the user taps the return button 9031, the electronic device may display a user interface previous to a current user interface. When detecting that the user taps the home screen button 9032, the electronic device may display the home screen. When detecting that the user taps the outgoing call task history button 9033, the electronic device may display a task recently opened by the user. The navigation buttons may alternatively be named in other manners. For example, 9031 may be referred to as a back button, 9032 may be referred to as a home button, and 9033 may be referred to as a menu button. This is not limited in this embodiment of this application. The navigation buttons in the navigation bar 903 are not limited to virtual keys, and may also be implemented as physical buttons.

S801: Detect a type of a to-be-detected card when detecting that the card tray is inserted.

It should be understood that the electronic device may detect insertion of the card tray by using the insertion and removal detection method of the card tray shown in FIG. 6. Further, the electronic device may detect the type of the to-be-detected card on the card tray by using the methods shown in FIG. 7A and FIG. 7B. When the to-be-detected card is a SIM card, the electronic device may perform S802 to S804. When the to-be-detected card is an SD card, the electronic device may load the SD card, so that the electronic device reads data in the SD card or writes data into the SD card. When the to-be-detected card is neither the SIM card nor an SD card, it indicates that no card is inserted or an insertion manner is incorrect. For example, a side that is of the SIM card and that does not include pins is in contact with a card connector. In this case, prompt information indicating that no card is inserted or an insertion manner is incorrect may be output.

S802: Output a dialog box when the to-be-detected card is a SIM card and the eSIM card is enabled. The dialog box includes a first control and a second control. The first control indicates to switch the eSIM card to the SIM card, and the second control indicates not to switch the eSIM card to the SIM card. It should be understood that the second control is not a necessary control in this embodiment of this application. In another embodiment of this application, the dialog box may alternatively not include the second control.

In an implementation, the electronic device may display a first user interface. The first user interface includes the dialog box, and displays indication information indicating to switch the eSIM card to the SIM card, the first control, and the second control.

When the to-be-detected card is a SIM card, the electronic device may further obtain an operating state of the eSIM card. When the eSIM card is in the operating state, the electronic device may output the first user interface. The first user interface displays indication information indicating to switch the eSIM card to the SIM card.

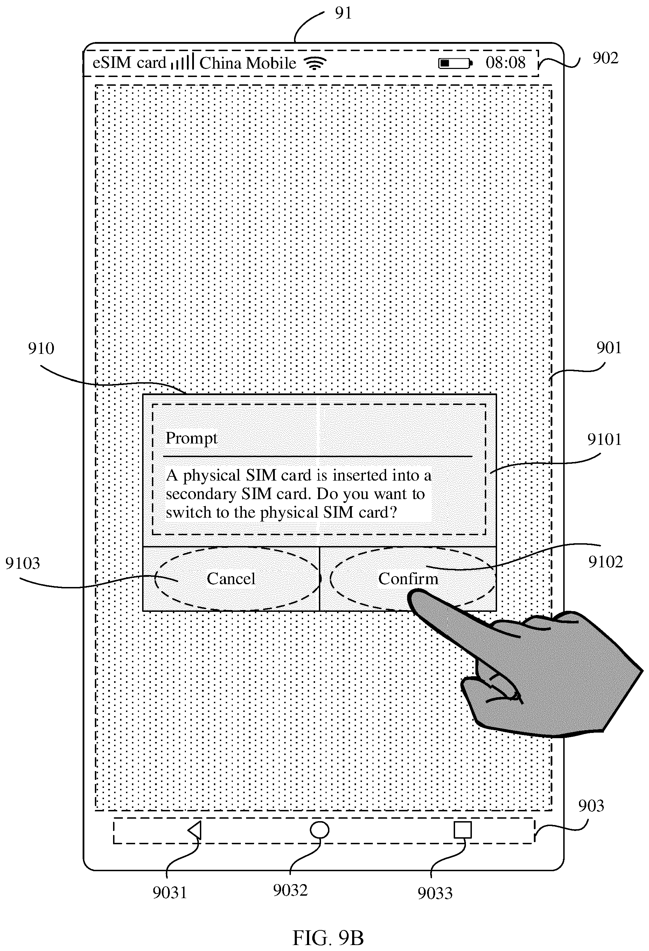

The first user interface may be shown in FIG. 9B. A user interface 91 may include indication information indicating to switch from the eSIM card to the SIM card. The user may exchange information with the electronic device based on content displayed on the first user interface. In addition to the content on the user interface 90, the user interface 91 may further include a first dialog box 910. The first dialog box 910 includes a display area 9101, a determining control 9102, and a cancellation control 9103. When detecting a user operation entered for the determining control 9102, for example, tap or double tap, the electronic device performs S803 to switch the eSIM card to the SIM card. When detecting a user operation entered for the cancellation control 9103, for example, tap or double tap, the electronic device performs S804, to maintain a connection to the eSIM card, and does not switch to the SIM card. Herein, the determining control 9102 is the first control, and the cancellation control 9103 is the second control.

S803: Switch the eSIM card to the SIM card in response to a first user operation entered for the first control.

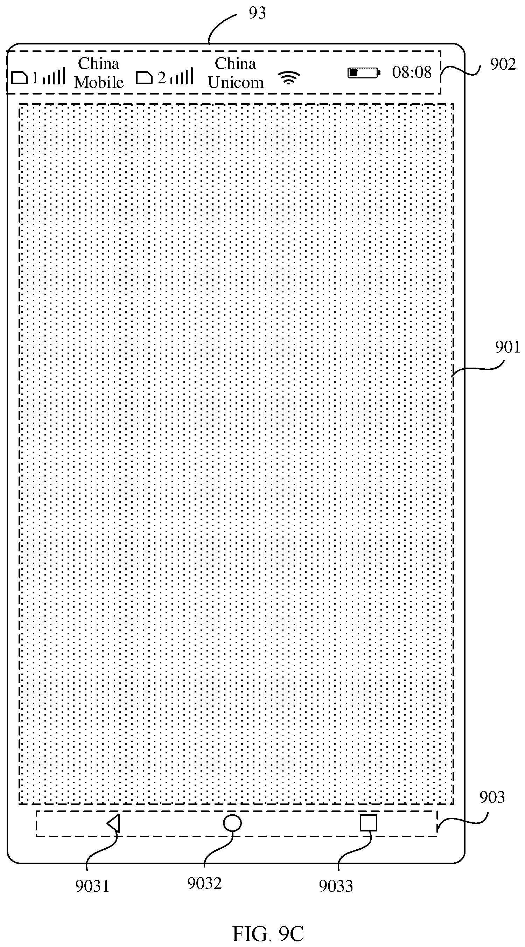

Specifically, the electronic device may interrupt a communication connection between the eSIM card and a baseband processor, and establish a communication connection between the to-be-detected card (namely, the SIM card) and the baseband processor, and further connect to the mobile network by using the to-be-detected card. FIG. 9C is a schematic diagram of a user interface obtained after switching according to this embodiment of this application. After switching the eSIM card to the SIM card, the electronic device may change network statuses of the SIM card and the eSIM card in the status bar 902 of a current user interface 92. In FIG. 9C, an example in which the to-be-detected card is a SIM card of China Unicom is used. When a plurality of SIM cards are inserted into the electronic device, a network status of another SIM card may be further displayed. As shown in FIG. 9C, the primary SIM card is of China Mobile, and the status bar 902 further displays a network status of the primary SIM card.

S804: Maintain a communication connection between the eSIM card and the mobile network in response to a second user operation entered for the second control.

After detecting a tap operation entered for the cancellation control 9033, the electronic device maintains a communication connection between the eSIM card and the baseband processor, so that the eSIM card can maintain a communication connection to the mobile network. In this case, the electronic device may close the dialog box 910.

### Embodiment 2

A user may press a power button of an electronic device, and in this case, the electronic device is powered on. In a power-on process, the electronic device loads an operating system. After the operating system is loaded, the electronic device may detect a to-be-detected card and detect a status of an eSIM card. If a SIM card is detected and the eSIM card is enabled, indication information indicating the user to select the SIM card or the eSIM card may be output. As shown in FIG. 10, the method may include but is not limited to the following steps.

S1001: Detect a type of the to-be-detected card after the operating system is loaded.

In a specific implementation, the electronic device may detect the type of the to-be-detected card by using the methods shown in FIG. 7A and FIG. 7B. When the to-be-detected card is a SIM card, the electronic device may perform S102 to S104. When the to-be-detected card is an SD card, the electronic device may load the SD card, so that the electronic device reads data in the SD card or writes data into the SD card. When the to-be-detected card is neither the SIM card nor an SD card, it indicates that no card is inserted or an insertion manner is incorrect. For example, a side that is of the SIM card and that does not include pins is in contact with a card connector. In this case, prompt information indicating that no card is inserted or an insertion manner is incorrect may be output.

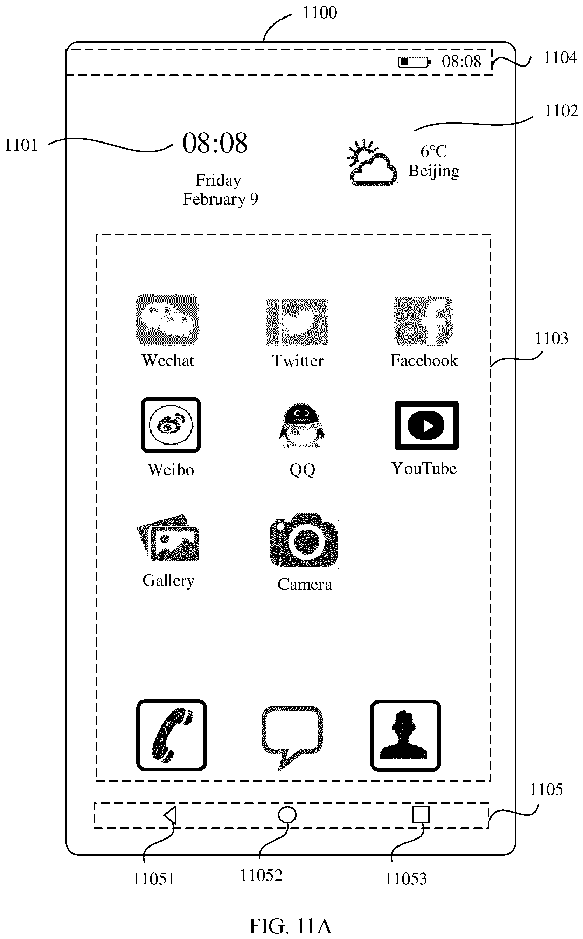

It should be understood that after the operating system is loaded, the electronic device may display a home screen. As shown in FIG. 11A, the home screen of the electronic device may be a home screen 1100 including a calendar widget (widget) 1101, a weather widget 1102, an application icon 1103, a status bar 1104, and a navigation bar 1105.

The calendar widget 1101 may be configured to indicate current time, for example, information about a date, a day of a week, and a time division.

The weather widget 1102 may be configured to indicate a weather type, for example, cloudy to sunny or light rain, may be further configured to indicate information such as a temperature, and may be further configured to indicate a location.

The application icon 1103 may include a WeChat (WeChat) icon, a Twitter (Twitter) icon, a Facebook (Facebook) icon, a Weibo (Weibo) icon, a QQ (Tencent QQ) icon, a YouTube (YouTube) icon, a gallery (Gallery) icon, a camera (camera) icon, and the like, and may further include an icon of another application. This is not limited in this embodiment of this application. Any application icon may be used to respond to an operation of the user, for example, a touch operation, so that the electronic device starts an application corresponding to the icon.

The status bar 1104 may be configured to display a network status (including a name of an operator, signal strength, and the like), time, a Wi-Fi icon, a current battery level, and the like of the SIM card. It should be understood that before the home screen 1100 is displayed, the electronic device has not detected the SIM card and the eSIM card. Therefore, the status bar of the home screen 1100 does not display a network status of the SIM card or the eSIM card in the electronic device.

The navigation bar 1105 may include system navigation buttons such as a return button 11051, a home screen (home screen) button 11052, and an outgoing call task history button 10053. For functions of the controls, refer to related descriptions of the return button 9031, the home screen button 9032, and the outgoing call task history button 9033 in FIG. 9A. Details are not described herein again.

S1002: Output a dialog box when the to-be-detected card is a SIM card and the eSIM card is enabled, where the dialog box includes a first control and a second control. The first control indicates to switch the eSIM card to the SIM card, and the second control indicates not to switch the eSIM card to the SIM card. It should be understood that the second control is not a necessary control in this embodiment of this application. In another embodiment of this application, the dialog box may alternatively not include the second control.

In an implementation, the electronic device may display a second user interface. The second user interface includes the dialog box, and the second user interface displays indication information indicating to select the eSIM card, the SIM card, the first control, and the second control.

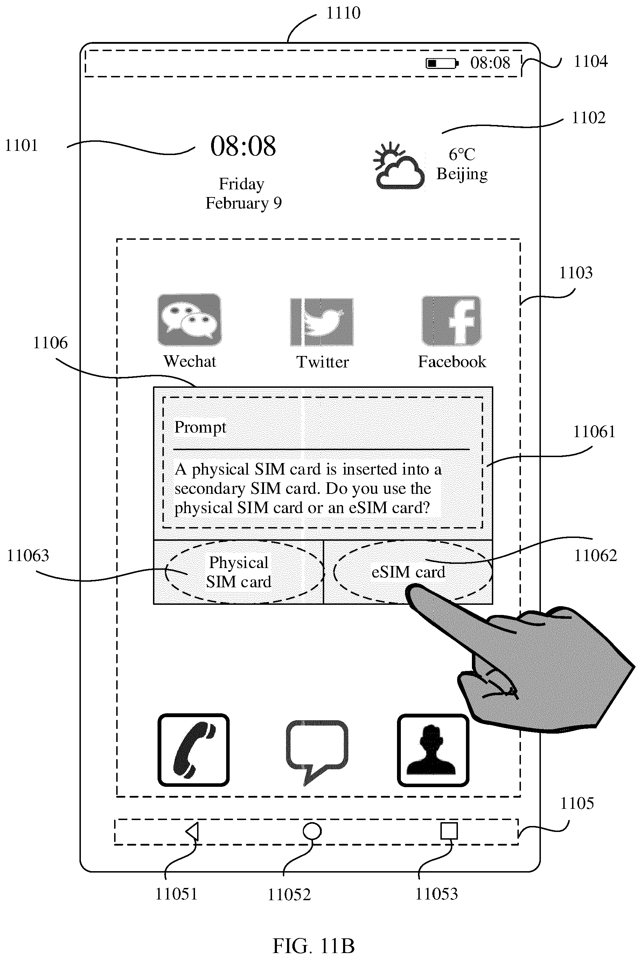

When the to-be-detected card is a SIM card and the eSIM card is enabled, the electronic device may output the second user interface. FIG. 11B shows the second user interface according to this embodiment of this application. In addition to display content on a user interface 1110, the second user interface 1110 includes a second dialog box 1106. The second dialog box 1106 includes a display area 11061, a first control 11063, and a second control 11062. When detecting a user operation entered for the first control 11063, for example, tap or double tap, the electronic device performs S1003. When detecting a user operation entered for the second control 11062, for example, tap or double tap, the electronic device performs S1004.

S1003: Connect to a mobile network by using the to-be-detected card in response to a third user operation for the first control.

The electronic device connects to the mobile network by using a SIM card in response to a user operation entered for the second control 11062 on the second user interface. That is, a communication connection between the SIM card and a baseband processor is established, to connect to the mobile network by using the SIM card.

S1004: Connect to the mobile network by using the eSIM card in response to a fourth user operation entered for the second control.

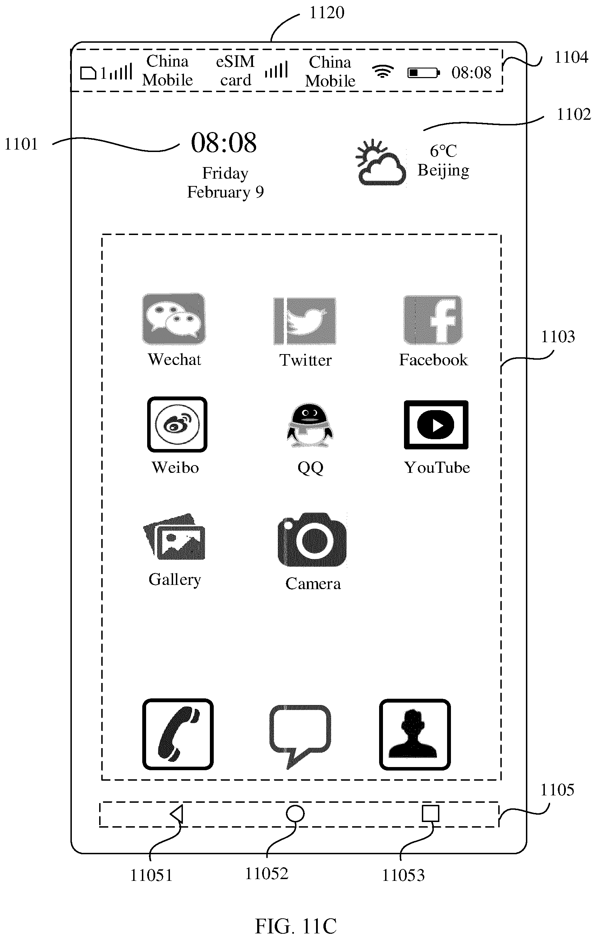

The electronic device connects to the mobile network by using the eSIM card in response to a user operation entered for the first control 11063 on the second user interface. That is, the communication connection between the eSIM card and the baseband processor is established, to connect to the mobile network by using the eSIM card. In this case, a user interface may be shown in FIG. 11C. A status bar of a user interface 1120 displays a network status of the eSIM card and a network status of a primary SIM card. Herein, that a secondary SIM card shares a radio frequency resource with the eSIM card is used as an example for description.

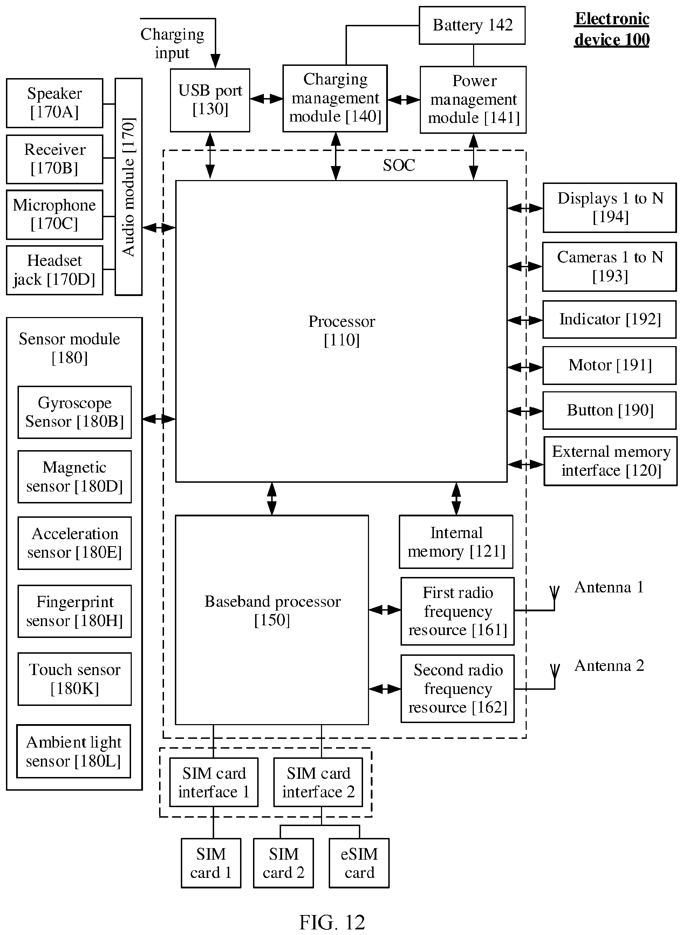

FIG. 12 is a schematic diagram of a structure of an electronic device according to an embodiment of this application. The electronic device 100 may include a processor 110, an external memory interface 120, an internal memory 121, a universal serial bus (universal serial bus, USB) port 130, a charging management module 140, a power management module 141, a battery 142, a baseband processor 150, a first transmitter 153, a first radio frequency resource 161, a second video resource 162, an antenna 1, an audio module 170, a speaker 170A, a receiver 170B, a microphone 170C, a headset interface 170D, a sensor module 180, a button 190, a motor 191, an indicator 192, a camera 193, a display 194, a SIM card interface 1, a SIM card interface 2, an eSIM card 5, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that this embodiment of the present invention may be used to implement the methods described in Embodiment 1 and Embodiment 2 of this application, and a structure shown in this embodiment of the present invention does not constitute a specific limitation on the electronic device 100. In some other embodiments of this application, the electronic device 100 may include more or fewer components than those shown in the figure, or some components may be combined, or some components may be split, or there may be a different component layout. The components shown in the figure may be implemented by hardware, software, or a combination of software and hardware.

In some embodiments of this application, the electronic device may include one SIM card interface and one eSIM card. That is, the electronic device is the foregoing single-SIM single-active device. The SIM card interface shares one radio frequency resource with the eSIM card. In this case, the electronic device 100 may include only one radio frequency resource. In some other embodiments of this application, the electronic device may further include a plurality of SIM card interfaces and a plurality of eSIM cards. For example, the electronic device is a dual-SIM dual-active device or a multi-SIM multi-active device. The eSIM card may share one radio frequency resource with one of the SIM card interfaces. For example, the SIM card interface 1 is configured to connect to a SIM card 1. After the SIM card 1 is connected, the SIM card 1 independently occupies the first radio frequency resource 161. It should be understood that the SIM card interface 2 is configured to connect to a SIM card 2 or the eSIM card, and the SIM card 2 shares the second radio frequency resource 162 with the eSIM card. The eSIM card may be embedded in an SOC of the electronic device, or embedded in a baseband chip. The baseband chip may be integrated into the SOC, or may be independent of the SOC. The baseband chip includes a baseband processor and a radio frequency resource.

In this embodiment of this application, the SIM card interface is an interface on the SOC or the baseband chip, and is configured to connect to a SIM card connector. The SIM card connector is also an apparatus on the electronic device 100. The SIM card connector is configured to connect to a SIM card. The SIM card may be inserted into the SIM card connector or removed from the SIM card connector, to implement contact with and separation from the electronic device 100. The electronic device 100 may support one or N SIM card connectors, and N is a positive integer greater than 1. The SIM card connector may support a nano-SIM card, a micro-SIM card, the SIM card, and the like. The SIM card connector may also be compatible with different types of SIM cards. The SIM card connector may also be compatible with an external memory card (an SD card). The electronic device 100 interacts with a network by using the SIM card, to implement functions such as conversation and data communication. In some embodiments, the electronic device 100 uses the eSIM card, that is, an embedded SIM card. The eSIM card may be embedded into the electronic device 100, and cannot be separated from the electronic device 100.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronous serial bus, including a serial data line (serial data line, SDL) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to a wireless communication module 160 through the I2S interface, to implement a function of answering a call through a Bluetooth headset.

The PCM interface may also be configured to perform audio communication, and sample, quantize, and code an analog signal. In some embodiments, the audio module 170 may be coupled to the wireless communication module 160 through a PCM bus. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI may be configured to connect the processor 110 to a peripheral component such as the display 194 or the camera 193. The MIPI includes a camera serial interface (camera serial interface, CSI), a display serial interface (display serial interface, DSI), and the like. In some embodiments, the processor 110 communicates with the camera 193 via the CSI, to implement a photographing function of the electronic device 100. The processor 110 communicates with the display 194 via the DSI, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI, or the like.

The USB port 130 is an interface that conforms to a USB standard specification, and may be specifically a mini-USB port, a micro-USB port, a USB Type-C port, or the like. The USB port 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device such as an AR device.

It may be understood that an interface connection relationship between the modules shown in this embodiment of the present invention is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB port 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is connected to the battery 142, the charging management module 140, and the processor 110. The power management module 141 receives input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may be alternatively disposed in a same component.

A wireless communication function of the electronic device 100 may be implemented through the antenna 1, the antenna 2, the baseband processor 150, and at least one radio frequency resource (for example, the first radio frequency resource 161 and the second radio frequency resource 162).

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The radio frequency resource (for example, the first radio frequency resource 161 or the second radio frequency resource 162) may provide a wireless communication solution that includes 2G/3G/4G/5G or the like and that is applied to the electronic device 100. The radio frequency resource may include a modem processor, at least one filter, a switch, a power amplifier, a low noise amplifier (low noise amplifier, LNA), and the like. The first radio frequency resource 161 may receive an electromagnetic wave through the antenna 1, perform processing such as filtering and amplification on the received electromagnetic wave, and transmit a processed electromagnetic wave to the modem processor for demodulation. The first radio frequency resource 161 may further amplify a signal modulated by the modem processor, and convert an amplified signal into an electromagnetic wave for radiation through the antenna 1. In some embodiments, at least some functional modules of the radio frequency resource may be disposed in the processor 110 or the baseband processor. In some embodiments, at least some functional modules of the radio frequency resource and at least some modules of the processor 110 may be disposed in a same device. In some embodiments, at least some functional modules of the radio frequency resource may be shared by a plurality of radio frequency resources.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video on the display 194. In some embodiments, the modem processor may be an independent component. In some other embodiments, the modem processor may be independent of the processor 110, and is disposed in a same device as a mobile communication module 150 or another functional module.

The electronic device may further include a wireless communication module (not shown in the figure). The wireless communication module may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared technology (infrared, IR), and the like. The wireless communication module 160 may be one or more components integrating at least one communication processor module. The wireless communication module receives an electromagnetic wave through an antenna, performs frequency modulation and filtering processing on the electromagnetic wave signal, and sends the processed signal to the processor 110. The wireless communication module may further receive a to-be-sent signal from the processor 110, perform frequency modulation and amplification on the to-be-sent signal, and convert the signal into an electromagnetic wave through an antenna and radiate the signal.

In some embodiments, the antenna 1 of the electronic device 100 is coupled to the first radio frequency resource 161, and the antenna 2 of the electronic device 100 is coupled to the second radio frequency resource 162, so that the electronic device 100 may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GNSS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, which execute program instructions to generate or change display information.

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), Miniled, MicroLed, Micro-oLed, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP may be configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 can play or record videos in a plurality of coding formats, for example, moving picture experts group (moving picture experts group, MPEG)-1, MPEG-2, MPEG-3, and MPEG-4.

The NPU is a neural-network (neural-network, NN) processing unit. The NPU quickly processes input information by referring to a structure of a biological neural network, for example, by referring to a transfer mode between human brain neurons, and can further continuously perform self-learning. Applications such as intelligent cognition of the electronic device 100 may be implemented through the NPU, for example, image recognition, facial recognition, speech recognition, and text understanding.

The external memory interface 120 may be connected to an external storage card, for example, a micro-SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a sound playing function or an image playing function), and the like. The data storage area may store data (for example, audio data and an address book) and the like created when the electronic device 100 is used. In addition, the internal memory 121 may include a high speed random access memory, or may include a nonvolatile memory, for example, at least one magnetic disk storage device, a flash storage device, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB port 130, or may be a 3.5 mm open mobile electronic device platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyroscope sensor 180B may be configured to determine a moving posture of the electronic device 100. In some embodiments, an angular velocity of the electronic device 100 around three axes (namely, axes x, y, and z) may be determined by using the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall effect sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature, for example, automatic unlocking upon opening of the flip cover is set based on a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light-emitting diode (LED) and an optical detector such as a photodiode. The light emitting diode may be an infrared light emitting diode. The electronic device 100 emits infrared light by using the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a touch panel. The touch sensor 180K may be disposed on the display 194, and the touch sensor 180K and the display 194 constitute a touchscreen. The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. For touch operations performed on different areas of the display 194, the motor 191 may also correspond to different vibration feedback effects. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

In this embodiment of this application, a software system of the electronic device may use a layered architecture, an event-driven architecture, a microkernel architecture, a microservice architecture, or a cloud architecture. In this embodiment of this application, an Android system with a layered architecture is used as an example to describe the software structure of the electronic device.

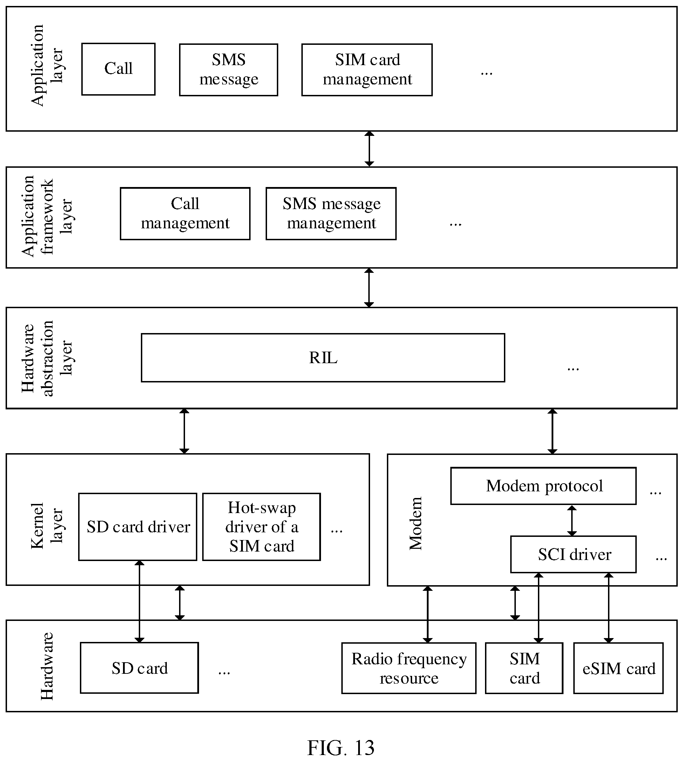

As shown in FIG. 13, the software system of the electronic device may include an application layer, an application framework (Application Framework) layer, a radio interface layer (Radio Interface Layer, RIL), a kernel (kernel) layer, and a modem.

The kernel layer is a layer between a hardware layer and the application framework layer. For a single-SIM single-active device or a single-SIM dual-active device, the hardware layer may include a SIM card, an SD card, an eSIM card, a radio frequency resource, and the like. For a dual-SIM dual-active device, the hardware layer includes at least a primary SIM card, a secondary SIM card, an SD card, an eSIM card, a radio frequency resource, and the like.

The kernel layer may include a SIM card insertion and removal driver, an SD card driver, and the like. In addition to the foregoing drivers, the kernel layer further includes a display driver, a camera driver, an audio driver, and the like.

The modem is also located between the hardware layer and the application layer. The modem communicates with the mobile network, transmits voice and data, and implements functions such as calls and short messages. The modem mainly processes encoding and decoding of a digital signal and a voice signal, and a modem protocol. The modem usually further includes a smart card interface (smart card interface, SCI) driver. The modem protocol is also referred to as a modem communication protocol, and includes a modulation protocol (Modulation Protocol), an error control protocol (Error Control Protocol), a data compression protocol (Data Compression Protocol), a file transfer protocol, and the like.

The RIL is an interface layer between the framework layer and the modem layer, and belongs to a hardware abstraction layer (hardware abstraction layer, HAL). The RIL abstracts various services provided by the modem layer, to provide a unified interface for the framework layer. The RIL provides a network service for an upper layer. The RIL may enable applications such as an SMS message, a call, and SIM card management to communicate with the modem. In some embodiments, the RIL may provide an abstraction layer, and the abstraction layer abstracts specific details of a hardware-related component of the electronic device.

The application framework layer provides an application programming interface (application programming interface, API) and a programming framework for an application at the application layer. The application framework layer includes some predefined functions.

An application layer includes applications such as Call, SMS Message, and SIM Card Management. In addition to the foregoing applications, the application layer may further include applications such as Camera, Map, Calendar, WLAN, and Music.

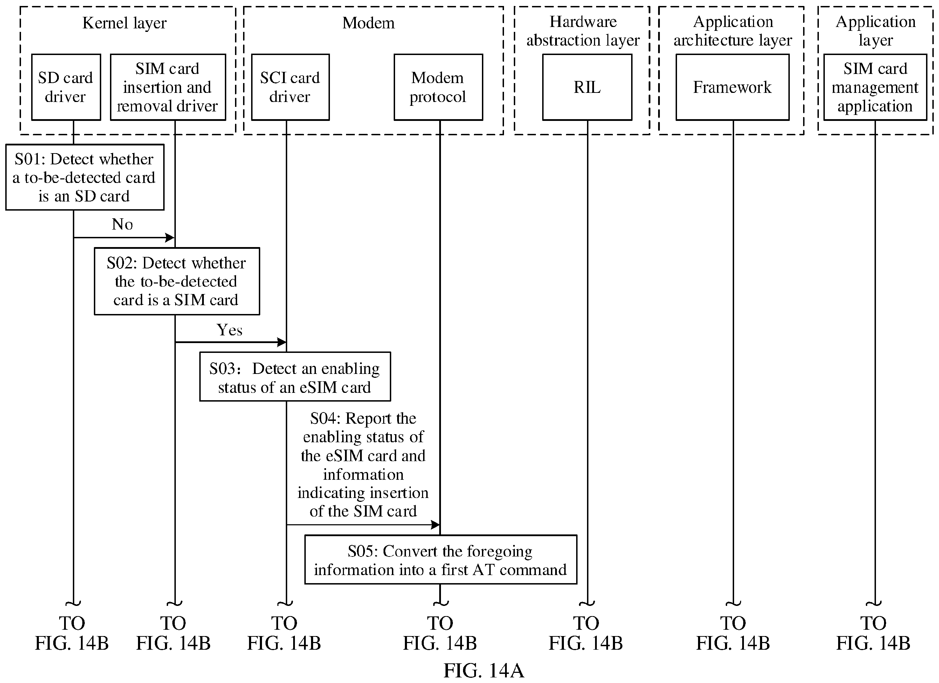

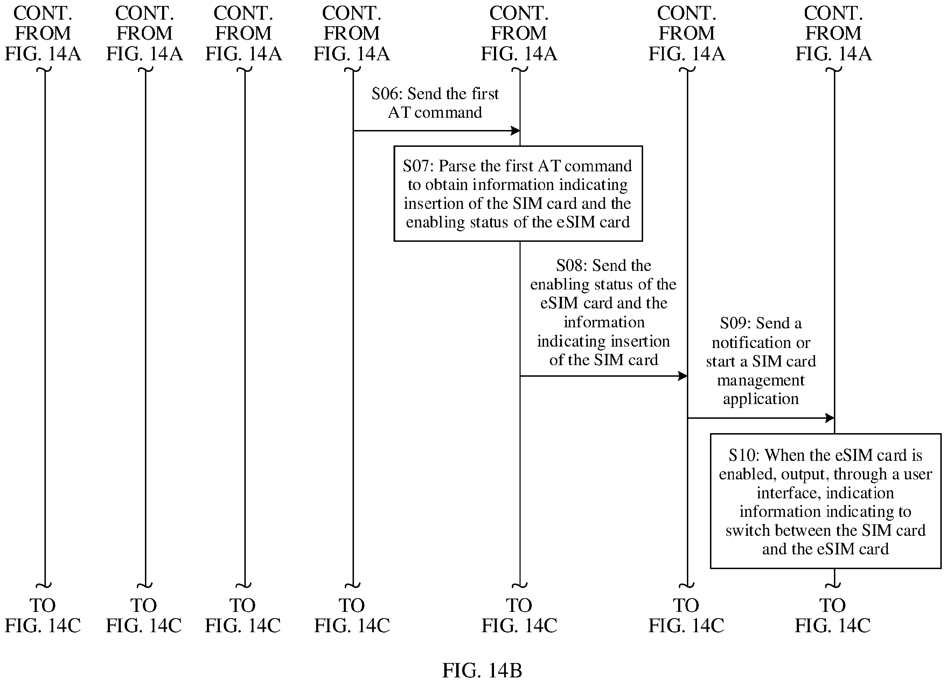

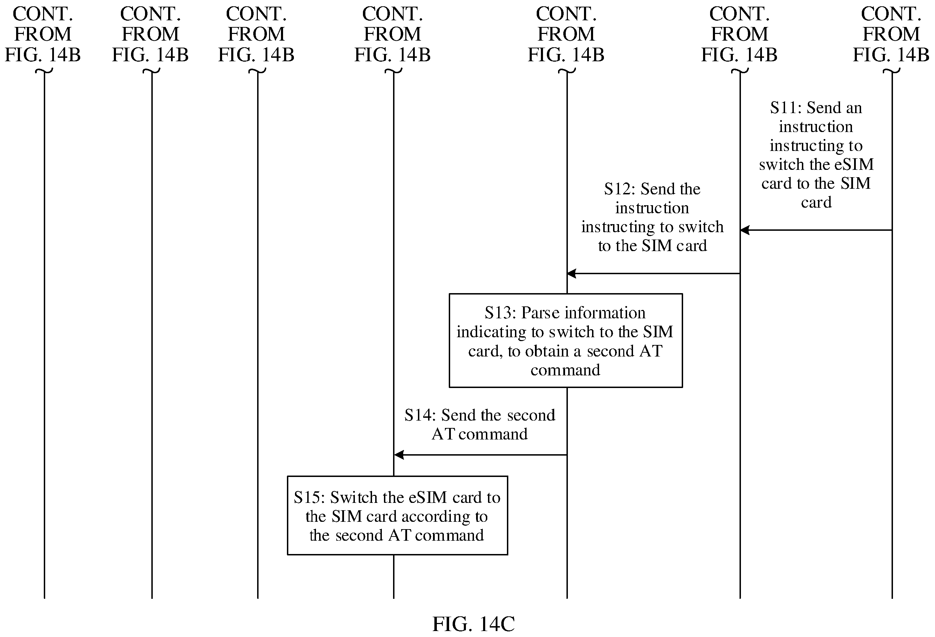

Based on a software architecture shown in FIG. 13, the following uses a specific example to describe a schematic flowchart of a method for switching between a SIM card and an eSIM card according to an embodiment of this application. As shown in FIG. 14A, FIG. 14B, and FIG. 14C, after a to-be-detected card is inserted into a card slot or the electronic device is powered on, the electronic device may perform the following procedure.

S01: An SD card driver detects whether the to-be-detected card is an SD card. If the SD card is detected, load the SD card; otherwise, performs S2.

S02: A SIM card insertion and removal driver detects whether the to-be-detected card is a SIM card. If a SIM card is detected, perform S3; otherwise, end the procedure.

It should be understood that for specific implementation of detecting whether the to-be-detected card is an SD card or a SIM card, refer to related descriptions in the method for detecting the to-be-detected card shown in FIG. 7A and FIG. 7B. Details are not described herein again.

S03: A SCI driver detects an enabling status of the eSIM card. The eSIM card and the SIM card are communicatively connected to the baseband chip/SOC through a same group of interfaces on the baseband chip/SOC, and the eSIM card shares a radio frequency resource with the SIM card.

S04: The SCI driver reports, to a modem driver, the enabling status of the eSIM card and information indicating insertion of the SIM card.

S05: The modem driver converts the enabling status of the eSIM card and the information indicating insertion of the SIM card into a first AT (Attention) command.

S06: The modem driver sends the first AT command to the radio interface layer (Radio Interface Layer, RIL).

Correspondingly, the RIL receives the first AT command sent by a hot-swap driver.

S07: The RIL parses the first AT command to obtain the information indicating insertion of the SIM card and the enabling status of the eSIM card.

S08: The RIL sends, to an operating system framework (Framework), the information indicating insertion of the SIM card and the enabling status of the eSIM card. Correspondingly, the Framework receives the information indicating insertion of the SIM card and the enabling status of the eSIM card.

S09: The Framework sends a notification to a SIM card management application or starts the SIM card management application. The notification includes information about insertion of the SIM card and the enabling status of the eSIM card.

Correspondingly, the SIM management application or the SIM card management application is started to receive the notification.

S10: When the eSIM card is enabled, the SIM card management application outputs, through a user interface, indication information indicating to switch between the SIM card and the eSIM card.

Specifically, the SIM card management application may output a first user interface or a second user interface. For the first user interface or the second user interface and the user operation on the foregoing interface, refer to related descriptions in FIG. 9A to FIG. 9C and FIG. 11A to FIG. 11C. Details are not described herein again.

In some other implementations, when the eSIM card is disabled, the SIM card management application sends, to the Framework, indication information indicating to connect the SIM card to a network. After receiving the information, the Framework sends the information to the RIL. The RIL parses the information to obtain a command indicating to connect the SIM card to the network, and sends the command to the modem driver. The modem driver connects to the mobile network according to the command by using a baseband processor, a radio frequency resource, the SIM card, or the like.

S11: The SIM card management application sends, to the Framework, an instruction instructing to switch the eSIM card to the SIM card.

Specifically, the SIM card management application may receive a user operation entered by the user on the first user interface or the second user interface, generate an instruction, and then send the instruction. The instruction may be an instruction instructing to switch the eSIM card to the SIM card.

S12: The Framework sends, to the RIL, the instruction instructing to switch the eSIM card to the SIM card.

S13: The RIL parses the instruction instructing to switch to the SIM card, to obtain a second AT command.

S14: The RIL sends the second AT command to the modem driver.

S15: The modem driver switches the eSIM card to the SIM card according to the second AT command.

Specifically, the modem driver interrupts a communication connection between the eSIM card and the modem driver, and establishes a communication connection between the SIM card and the modem driver, to connect to the mobile network by using the SIM card. Further, the modem driver may report a switching result to the SIM card management application, so that the SIM card management application may change a network status of the SIM card in a status bar of a user interface.

According to the context, the term "when" used in the foregoing embodiments may be interpreted as a meaning of "if", "after", "in response to determining", or "in response to detecting". Similarly, according to the context, the phrase "when it is determined that" or "if (a stated condition or event) is detected" may be interpreted as a meaning of "if it is determined that", "in response to determining", "when (a stated condition or event) is detected", or "in response to detecting (a stated condition or event)".

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in the computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive), or the like.

A person of ordinary skill in the art may understand that all or some of the processes of the methods in embodiments may be implemented by a computer program instructing related hardware. The program may be stored in a computer-readable storage medium. When the program runs, the processes of the methods in embodiments are performed. The storage medium includes any medium that can store program code, such as a ROM, a random access memory RAM, a magnetic disk, or a compact disc.

## Claims

1. A method for switching between a subscriber identity module, SIM, card and an embedded subscriber identity module, eSIM, card, wherein the method is applied to an electronic device, the electronic device comprises at least a card connector and an eSIM card, a SIM card connected to the card connector shares a radio frequency resource with the eSIM card, and the method comprises:
determining (S801) a type of a to-be-detected card connected to the card connector, wherein the type comprises a SIM card, wherein the card connector comprises eight metal sheets and eight pins, the eight pins and the eight metal sheets of the card connector are connected in a one-to-one correspondence, and when the card connector is connected to a SIM card, both a first metal sheet and a second metal sheet in the eight metal sheets are connected to a first pin of the SIM card; and
when the to-be-detected card is a SIM card and the eSIM card is enabled, displaying (S802) a prompt box, wherein the prompt box comprises a first control, and the first control indicates to switch the eSIM card to the to-be-detected card,
wherein the determining a type of a to-be-detected card connected to the card connector comprises:
inputting a first electrical signal to a pin that is in the card connector and that is connected to the first metal sheet, and detecting an electrical signal of a pin that is in the card connector and that is connected to the second metal sheet, to obtain a second electrical signal; and
when the first electrical signal is consistent with the second electrical signal, determining that the to-be-detected card is a SIM card.

2. The method according to claim 1, wherein the method further comprises:
switching the eSIM card to the to-be-detected card in response to a user operation entered for the first control.

3. The method according to claim 1 or 2, wherein both a third metal sheet and a fourth metal sheet in the eight metal sheets are connected to a second pin of the SIM card; and the determining a type of a to-be-detected card connected to the card connector comprises:
inputting a first electrical signal to a pin that is in the card connector and that is connected to the first metal sheet, and detecting an electrical signal of a pin that is in the card connector and that is connected to the second metal sheet, to obtain a second electrical signal;
inputting a third electrical signal to a pin that is in the card connector and that is connected to the third metal sheet, and detecting an electrical signal of a pin that is in the card connector and that is connected to the fourth metal sheet, to obtain a fourth electrical signal; and
when the first electrical signal is consistent with the second electrical signal and the third electrical signal is consistent with the fourth electrical signal, determining that the to-be-detected card is a SIM card.

4. The method according to claim 3, wherein the first pin is a power supply pin of the SIM card, and the second pin is a ground pin of the SIM card.

5. The method according to any one of claims 1 to 4, wherein the determining a type of a to-be-detected card connected to the card connector comprises:
determining whether the to-be-detected card is an SD card; and
when the to-be-detected card is not an SD card, detecting whether the to-be-detected card is a SIM card.

6. The method according to any one of claims 1 to 5, wherein the method further comprises:
determining, based on a change of an electrical signal of a card tray insertion and removal pin, that the to-be-detected card is inserted into the electronic device, and triggering the electronic device to perform the step of determining the type of the to-be-detected card connected to the card connector.

7. The method according to any one of claims 1 to 5, wherein the method further comprises:
loading an operating system of the electronic device in response to a power-on operation entered by a user; and
after the operating system is loaded, triggering the electronic device to perform the step of determining the type of the to-be-detected card connected to the card connector.

8. An electronic device (100), comprising a processor (110), a memory (121), at least one radio frequency resource (161, 162), an embedded subscriber identity module, eSIM, card, and a card connector, wherein a subscriber identity module, SIM, card connected to the card connector shares a radio frequency resource with the eSIM card, the memory is configured to store program instructions, the radio frequency resource is used by the electronic device to connect to a mobile network, and the processor is configured to invoke the memory to store the program instructions, to perform the following operations:
determining a type of a to-be-detected card connected to the card connector, wherein the type comprises a SIM card, wherein the card connector comprises eight metal sheets and eight pins, the eight pins and the eight metal sheets of the card connector are connected in a one-to-one correspondence, and when the card connector is connected to a SIM card, both a first metal sheet and a second metal sheet in the eight metal sheets are connected to a first pin of the SIM card; and
when the to-be-detected card is a SIM card and the eSIM card is enabled, displaying a prompt box, wherein the prompt box comprises a first control, and the first control indicates to switch the eSIM card to the to-be-detected card,
wherein that the processor performs the operation of determining the type of the to-be-detected card connected to the card connector comprises:
inputting a first electrical signal to a pin that is in the card connector and that is connected to the first metal sheet, and detecting an electrical signal of a pin that is in the card connector and that is connected to the second metal sheet, to obtain a second electrical signal; and
when the first electrical signal is consistent with the second electrical signal, determining that the to-be-detected card is a SIM card.

9. The electronic device according to claim 8, wherein the processor is further configured to:
switch the eSIM card to the to-be-detected card in response to a user operation entered for the first control.

10. The electronic device according to claim 8 or 9, wherein both a third metal sheet and a fourth metal sheet in the eight metal sheets are connected to a second pin of the SIM card; and that the processor performs the operation of determining the type of the to-be-detected card connected to the card connector comprises:
inputting a first electrical signal to a pin that is in the card connector and that is connected to the first metal sheet, and detecting an electrical signal of a pin that is in the card connector and that is connected to the second metal sheet, to obtain a second electrical signal;
inputting a third electrical signal to a pin that is in the card connector and that is connected to the third metal sheet, and detecting an electrical signal of a pin that is in the card connector and that is connected to the fourth metal sheet, to obtain a fourth electrical signal; and
when the first electrical signal is consistent with the second electrical signal and the third electrical signal is consistent with the fourth electrical signal, determining that the to-be-detected card is a SIM card.

11. The electronic device according to claim 10, wherein the first pin is a power supply pin of the SIM card, and the second pin is a ground pin of the SIM card.

12. A computer-readable storage medium including instructions, when the instructions are run on an electronic device of claims 8 to 11, the electronic device is enabled to perform the method according to any one of claims 1 to 7.

## Patentansprüche

1. Verfahren zum Umschalten zwischen einer Teilnehmeridentitätsmodul- (SIM-)Karte und einer eingebetteten Teilnehmeridentitätsmodul-(eSIM-)Karte, wobei das Verfahren auf eine elektronische Vorrichtung angewendet wird, die elektronische Vorrichtung mindestens einen Kartenverbinder und eine eSIM-Karte umfasst, wobei eine SIM-Karte, die mit dem Kartenverbinder verbunden ist, eine Funkfrequenzressource mit der eSIM-Karte gemeinsam nutzt, und das Verfahren Folgendes umfasst:
Bestimmen (S801) eines Typs einer zu erkennenden Karte, die mit dem Kartenverbinder verbunden ist, wobei der Typ eine SIM-Karte umfasst, wobei der Kartenverbinder acht Metallblätter und acht Stifte umfasst, die acht Stifte und die acht Metallblätter des Kartenverbinders in einer Eins-zu-Eins-Entsprechung verbunden sind, und wenn der Kartenverbinder mit einer SIM-Karte verbunden ist, sowohl ein erstes Metallblatt als auch ein zweites Metallblatt in den acht Metallblättern mit einem ersten Stift der SIM-Karte verbunden sind; und
wenn die zu erkennende Karte eine SIM-Karte ist und die eSIM-Karte aktiviert ist, Anzeigen (S802) eines Aufforderungsfeldes, wobei das Aufforderungsfeld ein erstes Steuerelement umfasst und das erste Steuerelement angibt, die eSIM-Karte auf die zu erkennende Karte umzuschalten,
wobei das Bestimmen eines Typs einer zu erkennenden Karte, die mit dem Kartenverbinder verbunden ist, Folgendes umfasst:
Eingeben eines ersten elektrischen Signals in einen Stift, der sich in dem Kartenverbinder befindet und mit dem ersten Metallblatt verbunden ist, und Erkennen eines elektrischen Signals eines Stifts, der sich in dem Kartenverbinder befindet und mit dem zweiten Metallblatt verbunden ist, um ein zweites elektrisches Signal zu erlangen; und
wenn das erste elektrische Signal mit dem zweiten elektrischen Signal übereinstimmt, Bestimmen, dass die zu erkennende Karte eine SIM-Karte ist.

2. Verfahren nach Anspruch 1, wobei das Verfahren ferner Folgendes umfasst:
Umschalten der eSIM-Karte auf die zu erkennende Karte als Reaktion auf eine für das erste Steuerelement eingegebene Benutzeroperation.

3. Verfahren nach Anspruch 1 oder 2, wobei sowohl ein drittes Metallblatt als auch ein viertes Metallblatt in den acht Metallblättern mit einem zweiten Stift der SIM-Karte verbunden sind; und das Bestimmen eines Typs einer zu erkennenden Karte, die mit dem Kartenverbinder verbunden ist, Folgendes umfasst:
Eingeben eines ersten elektrischen Signals in einen Stift, der sich in dem Kartenverbinder befindet und mit dem ersten Metallblatt verbunden ist, und Erkennen eines elektrischen Signals eines Stifts, der sich in dem Kartenverbinder befindet und mit dem zweiten Metallblatt verbunden ist, um ein zweites elektrisches Signal zu erlangen;
Eingeben eines dritten elektrischen Signals in einen Stift, der sich in dem Kartenverbinder befindet und mit dem dritten Metallblatt verbunden ist, und Erkennen eines elektrischen Signals eines Stifts, der sich in dem Kartenverbinder befindet und mit dem vierten Metallblatt verbunden ist, um ein viertes elektrisches Signal zu erlangen; und
wenn das erste elektrische Signal mit dem zweiten elektrischen Signal übereinstimmt und das dritte elektrische Signal mit dem vierten elektrischen Signal übereinstimmt, Bestimmen, dass die zu erkennende Karte eine SIM-Karte ist.

4. Verfahren nach Anspruch 3, wobei der erste Stift ein Stromversorgungsstift der SIM-Karte ist, und der zweite Stift ein Erdungsstift der SIM-Karte ist.

5. Verfahren nach einem der Ansprüche 1 bis 4, wobei das Bestimmen eines Typs einer zu erkennenden Karte, die mit dem Kartenverbinder verbunden ist, Folgendes umfasst:
Bestimmen, ob die zu erkennende Karte eine SD-Karte ist; und
wenn die zu erkennende Karte keine SD-Karte ist, Erkennen, ob die zu erkennende Karte eine SIM-Karte ist.

6. Verfahren nach einem der Ansprüche 1 bis 5, wobei das Verfahren ferner Folgendes umfasst:
Bestimmen, basierend auf einer Veränderung eines elektrischen Signals eines Stifts zum Einführen und Entfernen eines Kartenfachs, dass die zu erkennende Karte in die elektronische Vorrichtung eingeführt ist, und Auslösen der elektronischen Vorrichtung, um den Schritt des Bestimmens des Typs der zu erkennenden Karte, die mit dem Kartenverbinder verbunden ist, durchzuführen.

7. Verfahren nach einem der Ansprüche 1 bis 5, wobei das Verfahren ferner Folgendes umfasst:
Laden eines Betriebssystems der elektronischen Vorrichtung als Reaktion auf einen von einem Benutzer eingegebenen Einschaltvorgang; und
nach dem Laden des Betriebssystems, Auslösen der elektronischen Vorrichtung, um den Schritt des Bestimmens des Typs der zu erkennenden Karte, die mit dem Kartenverbinder verbunden ist, durchzuführen.

8. Elektronische Vorrichtung (100), umfassend einen Prozessor (110), einen Speicher (121), mindestens eine Funkfrequenzressource (161, 162), eine eingebettete Teilnehmeridentitätsmodul-(eSIM-)Karte und einen Kartenverbinder, wobei eine mit dem Kartenverbinder verbundene Teilnehmeridentitätsmodul-(SIM-)Karte eine Funkfrequenzressource mit der eSIM-Karte gemeinsam nutzt, der Speicher konfiguriert ist, um Programmanweisungen zu speichern, die Funkfrequenzressource von der elektronischen Vorrichtung verwendet wird, um sich mit einem mobilen Netzwerk zu verbinden und der Prozessor konfiguriert ist, um den Speicher zum Speichern der Programmanweisungen aufzurufen, um die folgenden Operationen durchzuführen:
Bestimmen eines Typs einer zu erkennenden Karte, die mit dem Kartenverbinder verbunden ist, wobei der Typ eine SIM-Karte umfasst, wobei der Kartenverbinder acht Metallblätter und acht Stifte umfasst, die acht Stifte und die acht Metallblätter des Kartenverbinders in einer Eins-zu-Eins-Entsprechung verbunden sind, und wenn der Kartenverbinder mit einer SIM-Karte verbunden ist, sowohl ein erstes Metallblatt als auch ein zweites Metallblatt in den acht Metallblättern mit einem ersten Stift der SIM-Karte verbunden sind; und
wenn die zu erkennende Karte eine SIM-Karte ist und die eSIM-Karte aktiviert ist, Anzeigen eines Aufforderungsfeldes, wobei das Aufforderungsfeld ein erstes Steuerelement umfasst und das erste Steuerelement angibt, die eSIM-Karte auf die zu erkennende Karte umzuschalten,
wobei, dass der Prozessor die Operation des Bestimmens des Typs der zu erkennenden Karte, die mit dem Kartenverbinder verbunden ist, durchführt, Folgendes umfasst:
Eingeben eines ersten elektrischen Signals in einen Stift, der sich in dem Kartenverbinder befindet und mit dem ersten Metallblatt verbunden ist, und Erkennen eines elektrischen Signals eines Stifts, der sich in dem Kartenverbinder befindet und mit dem zweiten Metallblatt verbunden ist, um ein zweites elektrisches Signal zu erlangen; und
wenn das erste elektrische Signal mit dem zweiten elektrischen Signal übereinstimmt, Bestimmen, dass die zu erkennende Karte eine SIM-Karte ist.

9. Elektronische Vorrichtung nach Anspruch 8, wobei der Prozessor ferner zu Folgendem konfiguriert ist:
Umschalten der eSIM-Karte auf die zu erkennende Karte als Reaktion auf eine für das erste Steuerelement eingegebene Benutzeroperation.

10. Elektronische Vorrichtung nach Anspruch 8 oder 9, wobei sowohl ein drittes Metallblatt als auch ein viertes Metallblatt in den acht Metallblättern mit einem zweiten Stift der SIM-Karte verbunden sind; und dass der Prozessor die Operation des Bestimmens des Typs der zu erkennenden Karte, die mit dem Kartenverbinder verbunden ist, durchführt, Folgendes umfasst:
Eingeben eines ersten elektrischen Signals in einen Stift, der sich in dem Kartenverbinder befindet und mit dem ersten Metallblatt verbunden ist, und Erkennen eines elektrischen Signals eines Stifts, der sich in dem Kartenverbinder befindet und mit dem zweiten Metallblatt verbunden ist, um ein zweites elektrisches Signal zu erlangen;
Eingeben eines dritten elektrischen Signals in einen Stift, der sich in dem Kartenverbinder befindet und mit dem dritten Metallblatt verbunden ist, und Erkennen eines elektrischen Signals eines Stifts, der sich in dem Kartenverbinder befindet und mit dem vierten Metallblatt verbunden ist, um ein viertes elektrisches Signal zu erlangen; und
wenn das erste elektrische Signal mit dem zweiten elektrischen Signal übereinstimmt und das dritte elektrische Signal mit dem vierten elektrischen Signal übereinstimmt, Bestimmen, dass die zu erkennende Karte eine SIM-Karte ist.

11. Elektronische Vorrichtung nach Anspruch 10, wobei der erste Stift ein Stromversorgungsstift der SIM-Karte ist, und der zweite Stift ein Erdungsstift der SIM-Karte ist.

12. Computerlesbares Speichermedium, einschließlich Anweisungen, wobei, wenn die Anweisungen auf einer elektronischen Vorrichtung nach Anspruch 8 bis 11 laufen, die elektronische Vorrichtung in die Lage versetzt wird, das Verfahren nach einem der Ansprüche 1 bis 7 durchzuführen.

## Revendications

1. Procédé de commutation entre une carte de module d'identité d'abonné, SIM, et une carte de module d'identité d'abonné intégré, eSIM, dans lequel le procédé est appliqué à un dispositif électronique, le dispositif électronique comprend au moins un connecteur de carte et une carte eSIM, une carte SIM connectée au connecteur de carte partage une ressource radiofréquence avec la carte eSIM, et le procédé comprend :
la détermination (S801) d'un type d'une carte à détecter connectée au connecteur de carte, dans lequel le type comprend une carte SIM, dans lequel le connecteur de carte comprend huit feuilles métalliques et huit broches, les huit broches et les huit feuilles métalliques du connecteur de carte sont connectées dans une correspondance un à un, et lorsque le connecteur de carte est connecté à une carte SIM, une première feuille métallique et une deuxième feuille métallique parmi les huit feuilles métalliques sont connectées à une première broche de la carte SIM ; et
lorsque la carte à détecter est une carte SIM et que la carte eSIM est activée, l'affichage (S802) d'une boîte d'invite, dans lequel la boîte d'invite comprend une première commande, et la première commande indique de basculer la carte eSIM vers la carte à détecter,
dans lequel la détermination d'un type d'une carte à détecter connectée au connecteur de carte comprend :
la saisie d'un premier signal électrique à une broche qui est dans le connecteur de carte et qui est connectée à la première feuille métallique, et la détection d'un signal électrique d'une broche qui est dans le connecteur de carte et qui est connectée à la deuxième feuille métallique, pour obtenir un deuxième signal électrique ; et
lorsque le premier signal électrique est cohérent avec le deuxième signal électrique, la détermination que la carte à détecter est une carte SIM.

2. Procédé selon la revendication 1, dans lequel le procédé comprend également :
la commutation de la carte eSIM vers la carte à détecter en réponse à une opération utilisateur entrée pour la première commande.

3. Procédé selon la revendication 1 ou 2, dans lequel une troisième et une quatrième feuille métallique parmi les huit feuilles métalliques sont connectées à une seconde broche de la carte SIM ; et la détermination d'un type d'une carte à détecter connectée au connecteur de carte comprend :
la saisie d'un premier signal électrique à une broche qui est dans le connecteur de carte et qui est connectée à la première feuille métallique, et la détection d'un signal électrique d'une broche qui est dans le connecteur de carte et qui est connectée à la deuxième feuille métallique, pour obtenir un deuxième signal électrique ;
la saisie d'un troisième signal électrique à une broche qui est dans le connecteur de carte et qui est connectée à la troisième feuille métallique, et la détection d'un signal électrique d'une broche qui est dans le connecteur de carte et qui est connectée à la quatrième feuille métallique, pour obtenir un quatrième signal électrique ; et
lorsque le premier signal électrique est cohérent avec le deuxième signal électrique et que le troisième signal électrique est cohérent avec le quatrième signal électrique, la détermination que la carte à détecter est une carte SIM.

4. Procédé selon la revendication 3, dans lequel la première broche est une broche d'alimentation en énergie de la carte SIM, et la seconde broche est une broche de masse de la carte SIM.

5. Procédé selon l'une quelconque des revendications 1 à 4, dans lequel la détermination d'un type d'une carte à détecter connectée au connecteur de carte comprend :
le fait de déterminer si la carte à détecter est une carte SD ; et
lorsque la carte à détecter n'est pas une carte SD, le fait de détecter si la carte à détecter est une carte SIM.

6. Procédé selon l'une quelconque des revendications 1 à 5, dans lequel le procédé comprend également :
la détermination, sur la base d'un changement d'un signal électrique d'une insertion de tiroir à cartes et d'une broche de retrait, que la carte à détecter est insérée dans le dispositif électronique, et le déclenchement du dispositif électronique pour réaliser l'étape de détermination du type de la carte à détecter connectée au connecteur de carte.

7. Procédé selon l'une quelconque des revendications 1 à 5, dans lequel le procédé comprend également :
le chargement d'un système d'exploitation du dispositif électronique en réponse à une opération de mise sous tension entrée par un utilisateur ; et
après que le système d'exploitation est chargé, le déclenchement du dispositif électronique pour réaliser l'étape de détermination du type de la carte à détecter connectée au connecteur de carte.

8. Dispositif électronique (100), comprenant un processeur (110), une mémoire (121), au moins une ressource radiofréquence (161, 162), une carte de module d'identité d'abonné intégré, eSIM et un connecteur de carte, dans lequel une carte de module d'identité d'abonné, SIM, connectée au connecteur de carte partage une ressource radiofréquence avec la carte eSIM, la mémoire est configurée pour stocker des instructions de programme, la ressource radiofréquence est utilisée par le dispositif électronique pour se connecter à un réseau mobile, et le processeur est configuré pour invoquer la mémoire pour stocker les instructions de programme, pour réaliser les opérations suivantes :
la détermination d'un type d'une carte à détecter connectée au connecteur de carte, dans lequel le type comprend une carte SIM, dans lequel le connecteur de carte comprend huit feuilles métalliques et huit broches, les huit broches et les huit feuilles métalliques du connecteur de carte sont connectées dans une correspondance un à un, et lorsque le connecteur de carte est connecté à une carte SIM, une première feuille métallique et une deuxième feuille métallique parmi les huit feuilles métalliques sont connectées à une première broche de la carte SIM ; et
lorsque la carte à détecter est une carte SIM et que la carte eSIM est activée, l'affichage d'une boîte d'invite, dans lequel la boîte d'invite comprend une première commande, et la première commande indique de basculer la carte eSIM vers la carte à détecter,
dans lequel le fait que le processeur réalise l'opération de détermination du type de la carte à détecter connectée au connecteur de carte comprend :
la saisie d'un premier signal électrique à une broche qui est dans le connecteur de carte et qui est connectée à la première feuille métallique, et la détection d'un signal électrique d'une broche qui est dans le connecteur de carte et qui est connectée à la deuxième feuille métallique, pour obtenir un deuxième signal électrique ; et
lorsque le premier signal électrique est cohérent avec le deuxième signal électrique, la détermination que la carte à détecter est une carte SIM.

9. Dispositif électronique selon la revendication 8, dans lequel le processeur est également configuré pour :
commuter la carte eSIM vers la carte à détecter en réponse à une opération utilisateur entrée pour la première commande.

10. Dispositif électronique selon la revendication 8 ou 9, dans lequel une troisième feuille métallique et une quatrième feuille métallique parmi les huit feuilles métalliques sont connectées à une seconde broche de la carte SIM ; et le fait que le processeur réalise l'opération de détermination du type de la carte à détecter connectée au connecteur de carte comprend :
la saisie d'un premier signal électrique à une broche qui est dans le connecteur de carte et qui est connectée à la première feuille métallique, et la détection d'un signal électrique d'une broche qui est dans le connecteur de carte et qui est connectée à la deuxième feuille métallique, pour obtenir un deuxième signal électrique ;
la saisie d'un troisième signal électrique à une broche qui est dans le connecteur de carte et qui est connectée à la troisième feuille métallique, et la détection d'un signal électrique d'une broche qui est dans le connecteur de carte et qui est connectée à la quatrième feuille métallique, pour obtenir un quatrième signal électrique ; et
lorsque le premier signal électrique est cohérent avec le deuxième signal électrique et que le troisième signal électrique est cohérent avec le quatrième signal électrique, la détermination que la carte à détecter est une carte SIM.

11. Dispositif électronique selon la revendication 10, dans lequel la première broche est une broche d'alimentation en énergie de la carte SIM, et la seconde broche est une broche de masse de la carte SIM.

12. Support de stockage lisible par ordinateur comportant des instructions, lorsque les instructions sont exécutées sur un dispositif électronique selon les revendications 8 à 11, le dispositif électronique est activé pour réaliser le procédé selon l'une quelconque des revendications 1 à 7.
